# FASCICULE DE BREVET EUROPEEN

(11) **EP 3 753 259 B1**
(45) Date de publication et mention de la délivrance du brevet: **07.12.2022**
(21) Numéro de dépôt: 19710049.8
(22) Date de dépôt: 14.02.2019
(51) Int. Cl.: H04Q 11/00, H04J 14/02

(54) **PLAN DE COMMANDE POUR UN RÉSEAU OPTIQUE DE TRANSMISSION DE RAFALES MULTI-PORTEUSES DE DONNÉES À ADAPTATION DYNAMIQUE DE SÉQUENCE D'APPRENTISSAGE**
STEUERUNGSEBENE FÜR EIN OPTISCHES NETZWERK ZUR ÜBERTRAGUNG VON MEHRTRÄGERDATENBURSTS MIT DYNAMISCHER ANPASSUNG DER LERNSEQUENZ
CONTROL PLANE FOR AN OPTICAL NETWORK FOR TRANSMITTING MULTI-CARRIER DATA BURSTS WITH DYNAMIC ADAPTATION OF LEARNING SEQUENCE

(30) Priorité: 16.02.2018 FR 1851325
(43) Date de publication de la demande: 23.12.2020
(73) Titulaire: Orange, 92130 Issy-les-Moulineaux (FR)
(72) Inventeur: HAN, Bing, 92326 CHÂTILLON CEDEX (FR); GAVIGNET, Paulette, 92326 CHÂTILLON CEDEX (FR); PINCEMIN, Erwan, 92326 CHÂTILLON CEDEX (FR)
(74) Mandataire: Vidon Brevets & Stratégie
(86) Numéro de dépôt international: PCT/FR2019/050324
(87) Numéro de publication internationale: WO 2019/158861

(56) Documents cités:
- WO-A2-02/071791
- FR-A1- 3 024 622
- CAZZANIGA GIORGIO ET AL: "A new perspective on burst-switched optical networks", BELL LABS TECHNICAL JOURNAL, WILEY, CA, US, vol. 18, no. 3, 1 décembre 2013 (2013-12-01), pages 111-131, XP011628075, ISSN: 1089-7089, DOI: 10.1002/BLTJ.21630 [extrait le 2014-03-15]
- FABREGA J M ET AL: "Experimental demonstration of elastic optical networking utilizing time-sliceable bitrate variable OFDM transceiver", OFC 2014, OSA, 9 mars 2014 (2014-03-09), pages 1-3, XP032633369, DOI: 10.1109/OFC.2014.6886913
- JANSEN S L ET AL: "Long-haul transmission of 16x52.5 Gbits/s polarization-division-multiplexed OFDM enabled by MIMO processing", JOURNAL OF OPTICAL NETWORKING, OPTICAL SOCIETY OF AMERICA, vol. 7, no. 2, 1 février 2008 (2008-02-01) , pages 173-182, XP002496038, ISSN: 1536-5379, DOI: 10.1364/JON.7.000173

## Description

### 1. Domaine de l'invention

Le domaine de l'invention est celui des réseaux de communications optiques. Plus précisément, l'invention concerne l'amélioration de l'utilisation des ressources réseau dans de tels réseaux optiques.

### 2. Art antérieur et ses inconvénients

La croissance exponentielle du volume des données échangées au sein des réseaux de communication optiques impose une augmentation sans cesse croissante du débit des interfaces de transmission, qui atteignent aujourd'hui 100 Gbit/s et plus.

La contrepartie de cette augmentation du débit des interfaces est que le remplissage des canaux de transmission peut être relativement inefficace si ce n'est au travers d'une agrégation électronique coûteuse en interfaces de conversion optique-électrique-optique (O-E-O) et peu économe en énergie.

Il existe cependant plusieurs solutions optiques qui permettent d'accéder à la granularité sous la longueur d'onde conduisant ainsi à une meilleure utilisation des ressources en remplissant plus efficacement les canaux de transmission.

Parmi celles-ci, la solution SLPSN (Sub-Lambda Photonically Switched Networks pour « réseaux à commutation photonique sous la longueur d'onde ») (telle que décrite notamment dans ***"***Terms and définitions for Sub-Lambda Photonically Switched Networks", ITU, COM15-C2322 Rev.-E, Genève, Août 2012*)* utilise le domaine temporel. Cette solution repose sur la commutation photonique de tranches temporelles de longueurs d'onde appelées rafales (en anglais « bursts »), slots ou plus généralement SLPS Units (SLPSU) : elle consiste à rassembler un certain nombre de paquets destinés au même nœud d'extrémité dans une seule rafale. Cette façon de faire permet d'avoir des rafales de durée plus longue que les paquets IP natifs, et ainsi de relâcher les contraintes techniques (vitesse de traitement) au niveau des nœuds. Une telle technique est notamment décrite dans le document de brevet PCT WO 02/071791.

Parmi les solutions SLPSN les plus prometteuses, la solution basée sur du routage passif TWIN (pour « Time-domain Wavelength Interleaved Networking », « réseau à longueurs d'onde entrelacées dans le domaine temporel ») telle que décrite dans l'article "Efficient control plane for passive optical burst switching network" de A. Triki et al., ICOIN 2013, pp. 535-540, combine aiguillage en longueur d'onde et planification de l'accès à la longueur d'onde. L'aiguillage en longueur d'onde se base sur la pré-configuration d'arbres de couleur. L'aiguillage d'une rafale est réalisé par exemple par sa coloration à l'émission sur la longueur d'onde correspondant à l'arbre que l'on souhaite emprunter. La rafale est ainsi aiguillée vers la racine (ou destination) de l'arbre. Cette technique d'aiguillage permet d'éviter les dispositifs de commutation rapide dans les nœuds traversés (nœuds cœur du réseau), tandis que la programmation des allocations des longueurs d'onde sur les arbres permet d'utiliser efficacement les ressources optiques (émetteurs, récepteurs, canaux de longueur d'onde) sans aucune perte de collision. Le document « A new perspective on burst-switched optical networks », de CAZZANIGA et al. publié dans le « Bell Labs Technical Journal » en 2013, propose une variante de l'architecture TWIN dans un système optique, selon laquelle les nœuds sources sont associés à une unique longueur d'onde d'émission, et l'accord en longueur d'onde se fait au niveau des nœuds destinataires.

Afin d'augmenter la flexibilité de la couche optique, deux des inventeurs de la présente demande de brevet ont proposé la solution Tlme and Spectral optical Aggregation (TISA) dans l'article de P. Gavignet et al. « Time and Spectral optical Aggregation for Seamless Flexible Networks », Photonics in Switching, 2015, WeIII3-1, ainsi que dans le document de brevet WO2016/020602. TISA combine la solution TWIN et la technologie MB-OFDM (Multi-Band Orthogonal Frequency-Division Multiplexing) décrite par E. Pincemin et al. dans « Multi-band OFDM Transmission with Sub-band Optical Switching », Proc. ECOC 2013, Th.2.A.1, ce qui permet d'atteindre un niveau de granularité sous la longueur d'onde dans les domaines temporel et spectral.

TISA permet d'effectuer une agrégation purement optique avec la granularité la plus fine possible, permettant ainsi de répondre de façon plus flexible aux demandes des clients, tout en réalisant une meilleure utilisation des ressources déjà déployées dans les réseaux. L'agrégation, le routage et la séparation des données sont réalisés de façon transparente en fonction de la longueur d'onde. Cette combinaison de deux solutions temporelle et spectrale d'accès à la granularité sous la longueur d'onde dans un réseau de transmission optique permet de démultiplier la capacité des réseaux en offrant une granularité la plus fine possible, tout en permettant une augmentation des débits par canal jusqu'au Terabit/s (voire au-delà), et offre une flexibilité accrue par rapport aux techniques antérieures.

Selon cette solution TISA, chaque nœud source du réseau optique envoie des données OFDM sous forme de rafales, également appelées « bursts », qui occupent seulement une sous-bande spectrale. Chaque sous-bande spectrale est associée à un nœud destinataire du réseau optique, au sein duquel un récepteur cohérent est adapté à recevoir les rafales OFDM émises dans la sous-bande spectrale associée au nœud destinataire : on parle d'accord à la source, ce qui signifie que chaque nœud source émet des rafales de données mono-bande à la longueur d'onde du nœud destinataire avec lequel il veut communiquer.

Ces rafales, ou bursts, de données sont construites par découpe temporelle d'un signal multi-porteuses de type OFDM, obtenu par modulation multi-porteuses OFDM d'un signal source coloré, sur lequel sont imprimées les données numériques à transmettre. La longueur d'onde du signal source, et donc la couleur du signal, peuvent varier d'une rafale de données à la suivante, en en fonction du nœud destinataire auquel sont destinées les données. Chacun des nœuds sources émet donc des rafales mono-bande OFDM de données, dans des sous-bandes spectrales indépendantes. Les nœuds sources peuvent émettre des rafales à chacune des longueurs d'onde des différents nœuds destinations.

En outre, un module de combinaison, ou combineur de sous-bandes, reçoit l'ensemble des rafales de données mono-bande en provenance des nœuds sources, et les couple en rafales de données OFDM multi-bandes (MB-OFDM).

Afin que ces rafales de données MB-OFDM soient parfaitement combinées au niveau du combineur de sous-bandes, une architecture de contrôle reposant sur un plan de commande spécifique permet de contrôler les instants d'émission des rafales mono-bande par les différents nœuds sources, afin qu'elles atteignent simultanément le combineur de sous-bandes pour y être combinées en rafales multi-bandes. Un tel plan de commande repose sur une connaissance précise des temps de trajet des rafales de données mono-bande sur le réseau optique entre chacun des nœuds sources et le combineur de sous-bandes. Il permet en outre, comme dans les techniques TWIN par exemple, d'éviter les collisions dans le réseau optique et de gérer les contentions au sein du réseau et au niveau des nœuds destinataires. Une telle architecture de contrôle peut être centralisée ou distribuée.

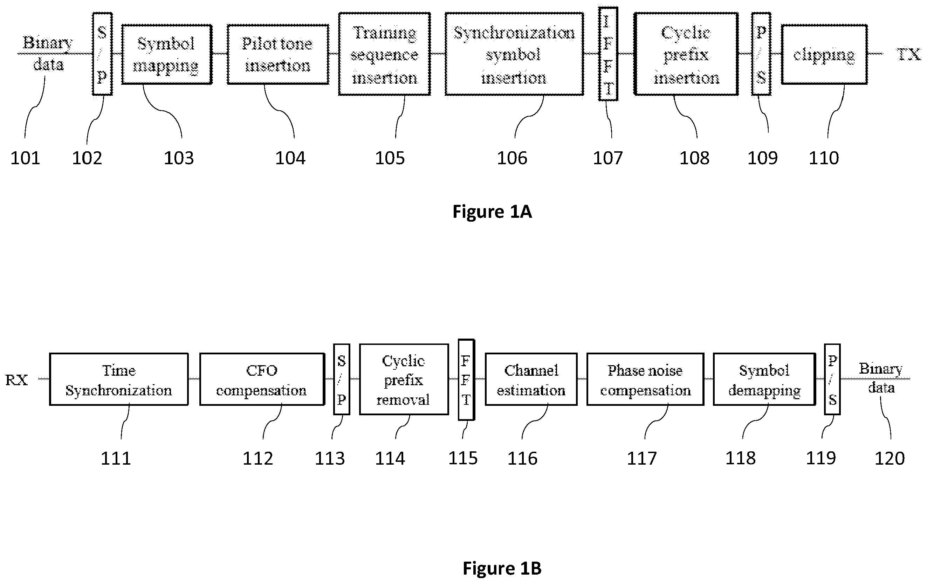

Au niveau d'un nœud source, une rafale de données mono-bande contient une ou plusieurs trames OFDM, composées chacune d'un symbole de synchronisation, de plusieurs symboles d'apprentissage, et de symboles de données utiles, appelés « *payload* ». Les algorithmes décrits par E. Pincemin et al. dans « Multi-band OFDM Transmission with Sub-band Optical Switching », Proc. ECOC 2013, Th.2.A.1 ou dans « Multi-band OFDM Transmission at 10OGbps with sub-band Optical Switching », Journal of Lightwave Technology, 2014*,* pour le traitement numérique du signal (ou DSP « Digital Signal Processing ») sont utilisés pour générer des rafales OFDM au niveau d'un nœud source et les recevoir au niveau d'un nœud destinataire. Les **figures 1A et 1B** illustrent les différentes étapes du traitement numérique du signal OFDM ainsi implémenté côté émetteur et côté récepteur.

Comme illustré sur la **figure 1A****,** des données binaires 101 sont incidentes en entrée de la partie de traitement numérique. Elles traversent un convertisseur série/parallèle 102, puis sont converties en symboles par le module « Symbol mapping » référencé 103. Des sous-porteuses pilotes sont insérées spectralement au sein des sous-porteuses utiles par le module référencé 104, afin d'estimer le bruit de phase généré par la chaîne de transmission (comprenant l'émetteur Tx, la fibre optique et le récepteur Rx). Ensuite, des symboles de référence (aussi qualifiés de symboles d'apprentissage), permettant en réception l'égalisation du canal de transmission, sont ajoutés par un module référencé 105 ; le symbole de synchronisation, utilisé pour la synchronisation temporelle, est inséré par un module référencé 106. La chaîne de traitement comprend également un module IFFT 107 réalisant une transformée de Fourier inverse, qui transforme le signal du domaine fréquentiel au domaine temporel. Un module référencé 108 permet l'introduction, au début de chaque symbole OFDM, d'un préfixe cyclique. Un tel préfixe cyclique permet d'absorber la Dispersion Chromatique (CD - correspondant aux variations de temps de propagation des différentes longueurs d'onde dans la fibre optique) et la Dispersion Modale de Polarisation (PMD - différence de vitesse de groupe entre les modes se propageant sur différents axes de polarisation de la fibre optique). Un tel préfixe cyclique consiste classiquement en une copie de la partie terminale du symbole OFDM.

Le signal subit ensuite une conversion parallèle série P/S 109 et un écrêtage, appelé « clipping » dans le module référencé 110, qui permet de réduire le rapport de la puissance pic du signal sur sa puissance moyenne (ou PAPR pour « Peak to Average Power Ratio »). En sortie de cette chaîne de traitement numérique du signal, on obtient les deux composantes en phase et en quadrature I et Q du signal.

La **figure 1B** illustre le traitement numérique du signal réalisé dans le récepteur, qui est le processus inverse de celui mis en œuvre dans l'émetteur.

La synchronisation temporelle 111 est effectuée pour retrouver le début de la trame OFDM. Après la compensation 112 du décalage de la fréquence porteuse (CFO : Carrier Frequency Offset), et la conversion série-parallèle 113, le préfixe cyclique est supprimé dans le module référencé 114. Grâce au préfixe cyclique, l'impact sur les données utiles de la dispersion chromatique CD et de la dispersion modale de polarisation PMD est nul. Une transformée de Fourier rapide (FFT - Fast Fourier Transform) 115 permet de transformer le signal du domaine temporel au domaine fréquentiel. Ensuite, l'égalisation de canal 116 et la compensation du bruit de phase 117 sont effectuées à l'aide des symboles d'apprentissage et des fréquences porteuses pilotes. Enfin, la dernière étape consiste à retrouver les données binaires 120 à partir des symboles utiles (« symbol demapping » 118 et conversion parallèle/série 119).

Pendant le processus d'égalisation mis en œuvre dans le récepteur, le module d'estimation de canal 116 estime le canal à partir des symboles d'apprentissage insérés dans la trame OFDM à l'émission. L'algorithme conventionnel d'égalisation, décrit par exemple dans « Multi-band OFDM Transmission at 100Gbps with sub-band Optical Switching », Journal of Lightwave Technology, 2014 par E. Pincemin et al., consiste à calculer symbole après symbole les coefficients de l'égaliseur de canal en comparant les symboles d'apprentissage émis et reçus, et à faire une moyenne des coefficients de l'égaliseur sur les symboles d'apprentissage (i.e. dans le domaine temporel) afin d'augmenter la robustesse de l'égaliseur aux diverses sources de bruits.

Dans un réseau optique de transmission de données mettant en œuvre la solution TISA, le trafic est émis sous forme de rafales de données, de sorte que les récepteurs des nœuds destinataires du réseau ne sont pas assurés de recevoir un flux de symboles en continu. Quand un récepteur ne reçoit pas de données, seul le bruit est présent à l'entrée du récepteur : on appelle cette partie du signal un « trou », ou « gap », ou « absence de signal ». Dans un réseau optique de type TISA, il existe donc des « trous » de temps en temps à l'entrée du récepteur, et la durée de ces « trous » est variable. On considère généralement que la durée d'un « gap » de petite taille est inférieure à 5 microsecondes, et celle d'un «gap» de grande taille, supérieure à 20 microsecondes.

Le récepteur étant conçu pour recevoir des flux de signaux en continu, il a des difficultés à gérer l'absence de signal, ce qui génère une pénalité. Si une rafale OFDM atteint un récepteur après un « trou » de grande durée, les premières centaines de nanosecondes de trame signal (en particulier, les symboles d'apprentissage) subissent une distorsion, en raison de phénomènes de réponse transitoire des composants électroniques embarqués dans le récepteur. Il apparaît alors une inadéquation entre les coefficients effectivement calculés de l'égaliseur de canal, et les coefficients qu'il conviendrait d'appliquer réellement au signal reçu pour l'égaliser correctement.

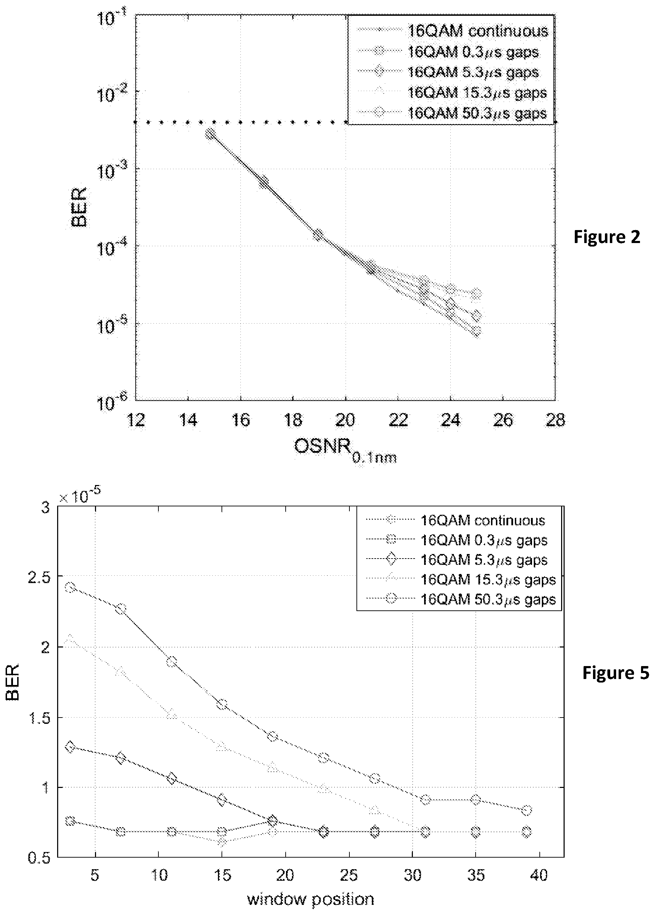

Afin d'analyser plus précisément l'influence de cette distorsion, les performances de la trame OFDM ont été évaluées pour différentes durées de « trous » à l'entrée du récepteur. La **figure 2** illustre les résultats de cette évaluation, sous forme de courbes de taux d'erreur binaire (BER) en fonction du rapport signal sur bruit optique (OSNR) mesurées dans différentes configurations.

On considère, pour chaque configuration, une trame OFDM 16QAM (Quadrature Amplitude Modulation) comprenant un symbole de synchronisation, 14 symboles d'apprentissage et 156 symboles de données, d'une durée totale de 4,7 microsecondes. Sur la **figure 2**, la courbe avec des marqueurs sous forme de points représente le résultat mesuré lorsque le récepteur fonctionne en mode continu. Les courbes avec marqueurs sous forme de carrés, losanges, triangles et cercles représentent respectivement les résultats mesurés en mode rafale avec des « trous » à la réception de 0,3, 5,3, 15,3 et 50,3 microsecondes. Comme on peut le constater sur la **figure 2**, la pénalité pour un taux d'erreur binaire BER égal à 2×10⁻⁵ augmente quand la durée du « trou », précédant la réception de la trame OFDM, augmente.

Afin de résoudre ce problème, L. Sadeghioon et al. ont proposé, dans « Software-based burst mode reception implementation for time-domain wavelength interleaved networks », 2015 European Conference on Optical Communication (ECOC), Valencia, 2015, pp. 1-3*,* d'ajouter des rafales de « bourrage » à l'entrée du récepteur quand il y a des « trous », afin de créer un flux de signal quasi-continu, et donc maintenir toujours le récepteur dans l'état de fonctionnement continu pour lequel il est conçu. Cette méthode de l'art antérieur utilise le plan de commande (et notamment les signaux de commande appelés « grants ») pour identifier la présence de trous au niveau du récepteur. Un émetteur génère les « bursts » de bourrage à l'entrée du récepteur.

Cette méthode, bien qu'efficace, augmente sensiblement la complexité de l'ensemble de la chaîne de transmission, et s'avère donc coûteuse.

Une autre solution à ce problème consiste à changer les composants électroniques du récepteur, afin que ce dernier présente une fréquence de coupure basse faible, ne générant pas de distorsion des signaux. De cette façon, le récepteur conserve le même comportement en présence ou en l'absence de signal.

Néanmoins, la conception et la fabrication de composants opto-électroniques large bande, permettant de transmettre des signaux à débit élevé (supérieur à 10Gbit/s), tout en présentant une fréquence de coupure basse très faible (de l'ordre de quelques centaines de Hz ou quelques kHz), ne sont pas chose aisée, de sorte que de tels composants s'avèrent coûteux et difficiles à développer.

Il existe donc un besoin d'une technique simple et peu coûteuse d'amélioration des performances de l'égalisation de canal, en réception, dans un réseau optique dans lequel les données sont transmises sous forme de rafales de données comprenant une ou plusieurs trames de signaux OFDM.

Il existe également un besoin d'une telle technique qui soit adaptée aussi bien aux réseaux optiques mettant en œuvre une solution de type TISA, qu'une solution de type TWIN avec modulation OFDM.

Il existe encore un besoin d'une telle technique qui permette d'optimiser le débit utile au sein du réseau optique.

### 3. Exposé de l'invention

L'invention répond à ces besoins en proposant un système d'émission de données dans un réseau optique comprenant une pluralité de nœuds optiques sources et de nœuds optiques destinataires. Dans un tel réseau optique, un nœud source est apte à générer un signal optique multi-porteuses de données obtenu par modulation d'un signal source à une longueur d'onde source et à émettre ledit signal optique multi-porteuses de données sous forme de rafales de données mono-bande pouvant être associées à des longueurs d'onde source distinctes. Une rafale de données mono-bande comprend, outre des symboles de données utiles, une séquence de symboles d'apprentissage composée d'une pluralité de symboles d'apprentissage.

En outre, dans le plan de commande, une unité de contrôle est apte à déterminer, pour l'un au moins des nœuds sources, des instants d'émission des rafales de données mono-bande et des longueurs d'onde sources à utiliser pour l'émission des rafales de données mono-bande, en fonction d'un temps de trajet des rafales de données entre le nœud source et le nœud destinataire, associé à la longueur d'onde source.

Selon l'invention, cette unité de contrôle détermine également une taille de la séquence de symboles d'apprentissage des rafales de données mono-bande.

Ainsi, l'invention repose sur une approche tout à fait nouvelle et inventive de l'utilisation des ressources dans un réseau optique fonctionnant en mode « burst », approche selon laquelle la taille de la séquence d'apprentissage de la trame du signal multi-porteuses est variable, et adaptable dynamiquement pour chacun des nœuds sources, par l'intermédiaire du plan de commande établi par l'unité de contrôle centralisée du réseau. La technique de l'invention propose ainsi avantageusement un enrichissement du plan de commande qui, outre les instants d'émission des rafales de données et les longueurs d'onde source associées, pilote également la taille des séquences d'apprentissage des rafales de données émises par les nœuds sources. Cette taille de la séquence d'apprentissage s'exprime préférentiellement sous la forme d'un nombre entier de symboles d'apprentissage contenus dans la séquence. Elle peut également s'exprimer sous la forme d'une durée souhaitée de cette séquence, exprimable en unités de temps.

En effet, comme indiqué précédemment, les phénomènes de réponse transitoire des composants opto-électroniques embarqués dans le récepteur d'un nœud destinataire, qui prennent naissance lorsque le récepteur ne fonctionne pas en mode continu, affectent de distorsion le début de la trame de signal multi-porteuses reçue, et donc en particulier les symboles d'apprentissage utilisés pour l'estimation de canal, ce qui induit des erreurs d'égalisation du signal. Un accroissement de la durée, ou taille, de la séquence d'apprentissage d'une trame de signal multi-porteuses permet, comme on le verra plus en détail dans la suite, d'améliorer les performances d'égalisation de canal du récepteur, en cas de réception de rafales de données faisant suite à une absence de signal de durée prolongée en entrée du récepteur. Cependant, un accroissement systématique pour toutes les rafales de données émises par tous les nœuds sources du réseau de la durée de la séquence d'apprentissage réduirait inutilement le débit utile des données dans le réseau.

Une adaptation dynamique de la taille de la séquence d'apprentissage, pilotée finement par l'unité de contrôle centralisée établissant le plan de commande, permet d'optimiser l'utilisation des ressources réseau en fonction des conditions de transmission, tout en réduisant la pénalité introduite par les récepteurs des nœuds destinataires, du fait de leur fonctionnement en mode « rafales ».

On notera que, sans perte de généralité, les rafales de données peuvent également contenir, outre des symboles de données utiles et une séquence de symboles d'apprentissage, un en-tête de données utiles à la gestion du réseau optique telles que les informations nécessaires à l'opération, l'administration et la maintenance du réseau (données OAM : Operation Administration and Maintenance) ou encore des données sur la contenance des bursts (nombre de trames Ethernet, IP, ...) ou encore toute autre donnée pertinente (FEC (Forward Error Correction) code : « code correcteur d'erreurs », etc ...).

Selon une première caractéristique de l'invention, l'unité de contrôle comprend un module d'émission de signaux de commande destinés aux nœuds sources et conformes au plan de commande, comprenant :
- une information relative à un instant d'émission des rafales de données mono-bande ;
- une information relative à une longueur d'onde source à utiliser pour l'émission des rafales de données mono-bande ;
- une information relative à une taille de la séquence de symboles d'apprentissage des rafales de données mono-bande.

De tels signaux de commande, également appelés « grants », sont transmis par l'unité de contrôle aux nœuds sources, pour contrôler les émissions de rafales. De tels grants contiennent classiquement des informations concernant la longueur d'onde utilisée et les instants d'émission. Selon l'invention, une nouvelle forme de plan de commande est proposée, dans lequel la structure de la trame multi-porteuses, et en particulier le nombre entier de symboles d'apprentissage, est utilisé comme paramètre dans ces « grants », pour permettre une adaptation de la taille de la séquence d'apprentissage dans les rafales.

On notera qu'une rafale peut contenir une ou plusieurs trames OFDM, et donc une ou plusieurs séquences d'apprentissage. La taille de la séquence d'apprentissage peut être définie pour toutes les trames contenues dans une même rafale, ou trame par trame, la première trame de la rafale pouvant contenir une séquence d'apprentissage plus longue que les suivantes. L'adaptation de la taille de la séquence d'apprentissage se fait donc rafale par rafale, ou paquets de rafales par paquets de rafales, selon le rythme de rafraîchissement par l'unité de contrôle ou selon un schéma d'émission prédéfini.

Selon un aspect de l'invention, l'unité de contrôle comprend un module de calcul :
- d'une durée d'absence de signal en entrée d'au moins un des nœuds destinataires, en fonction des instants d'émission des rafales de données mono-bande par les nœuds sources et des temps de trajet des rafales de données entre les nœuds sources et le nœud destinataire ;
- de la taille de la séquence de symboles d'apprentissage des rafales de données mono-bande destinées au nœud destinataire, en fonction de la durée d'absence de signal calculée.

En effet, dans un tel réseau optique (par exemple de type TISA), le routage des signaux est basé sur la longueur d'onde, et chaque longueur d'onde est associée à une destination (accord à la source). Le chemin de transmission d'un nœud source à un nœud destinataire est donc prévisible, et l'unité de contrôle peut déterminer le temps de propagation d'une rafale de données entre le nœud source et le nœud destinataire. Comme les instants d'émission des rafales de données par un nœud source sont contrôlés par le plan de commande établi par l'unité de contrôle, cette dernière peut prévoir le temps d'arrivée des rafales à destination, et ainsi la durée des trous entre les rafales successives au niveau d'un récepteur. L'unité de contrôle peut alors en déduire la durée optimale de la séquence d'apprentissage, donc sa taille en nombre de symboles, pour obtenir la meilleure performance d'égalisation au niveau du récepteur.

Selon un autre aspect, l'unité de contrôle comprend également un module de réception d'informations de performance de réception des rafales de données mono-bande en provenance des nœuds destinataires, et le module de calcul est apte à mettre à jour la taille de la séquence de symboles d'apprentissage des rafales de données mono-bande en fonction des informations de performance de réception reçues par l'unité de contrôle.

Ainsi, la taille de la séquence d'apprentissage des rafales peut être optimisée, en fonction du feedback reçu des récepteurs sur la qualité de réception des rafales précédemment transmises, dont la taille de la séquence d'apprentissage était connue de l'unité de contrôle.

L'invention concerne également un nœud optique source d'un réseau optique comprenant une pluralité de nœuds sources et de nœuds destinataires. Un tel nœud optique source comprend un module de génération d'un signal optique multi-porteuses de données obtenu par modulation d'un signal source à une longueur d'onde source et un module d'émission du signal optique multi-porteuses de données sous forme de rafales de données mono-bande pouvant être associées à des longueurs d'onde source distinctes ; une rafale de données mono-bande comprend, outre des symboles de données utiles, une séquence de symboles d'apprentissage comprenant une pluralité de symboles d'apprentissage . Un tel nœud source comprend également un module de réception de signaux de commande comprenant une information relative à un instant d'émission des rafales de données mono-bande et une information relative à une longueur d'onde source à utiliser pour l'émission des rafales de données mono-bande.

Selon l'invention, les signaux de commande comprennent également une information relative à une taille de la séquence de symboles d'apprentissage des rafales de données mono-bande, et le module de génération comprend des moyens d'adaptation de la taille de la séquence de symboles d'apprentissage des rafales de données mono-bande en fonction de l'information reçue.

L'invention concerne également un nœud optique destinataire d'un réseau optique comprenant une pluralité de nœuds sources et de nœuds destinataires. Un tel nœud destinataire comprend un premier module de réception de rafales optiques de signaux de données multi-porteuses, obtenu par modulation d'un signal source à une longueur d'onde source, une rafale comprenant, outre des symboles de données utiles, une séquence de symboles d'apprentissage comprenant une pluralité de symboles d'apprentissage. Ce premier module de réception comprend un égaliseur de canal comprenant des moyens de calcul de coefficients d'égalisation de canal à partir de la séquence de symboles d'apprentissage.

Selon l'invention, un tel nœud destinataire comprend également un second module de réception de signaux de commande comprenant une information relative à une taille de la séquence de symboles d'apprentissage des rafales de données mono-bande, et l'égaliseur de canal tient compte de l'information relative à une taille de la séquence de symboles d'apprentissage pour le calcul des coefficients d'égalisation.

Selon un aspect de l'invention, les moyens de calcul des coefficients d'égalisation de canal sont des moyens de calcul itératifs mettant en œuvre :
- un calcul des coefficients d'égalisation de canal par moyennage sur un sous-ensemble de symboles d'apprentissage de la séquence d'apprentissage ;
- un calcul d'un taux d'erreur binaire affectant des données utiles obtenues en sortie du premier module de réception à partir des coefficients d'égalisation de canal calculés sur le sous-ensemble de symboles d'apprentissage ;
- un décalage du sous-ensemble de symboles d'apprentissage au sein de la séquence d'apprentissage ;

En outre, l'égaliseur de canal comprend des moyens de comparaison des taux d'erreur binaire calculés pour chacun des sous-ensembles de symboles d'apprentissage successifs et des moyens de sélection, en tant que coefficients d'égalisation à appliquer par l'égaliseur de canal, des coefficients d'égalisation de canal obtenus par moyennage sur le premier des sous-ensembles de symboles d'apprentissage associés à un taux d'erreur binaire calculé inférieur à un seuil déterminé.

Ainsi, la solution de l'invention repose sur un accroissement de la taille de la séquence d'apprentissage, par rapport à une trame multi-porteuses classique, et sur un calcul de la moyenne des coefficients de l'égaliseur, non plus sur tous les symboles de la séquence d'apprentissage, mais sur un sous-ensemble seulement de ces symboles d'apprentissage. Le début de la trame ayant subi une distorsion, en raison des phénomènes transitoires inhérents à la présence de « trous » en entrée du récepteur, on propose d'utiliser les coefficients de l'égaliseur sur une partie de la séquence d'apprentissage qui ne subit peu ou plus la distorsion. Pour ce faire, une fenêtre glissante englobant un sous-ensemble de symboles d'apprentissage, sur laquelle le moyennage des coefficients d'égalisation s'opère, est mise en place. On procède de manière itérative, en décalant progressivement cette fenêtre glissante, et en calculant, pour chaque position de cette fenêtre glissante, le taux d'erreur binaire affectant les données obtenues en procédant à l'égalisation de canal à partir des symboles d'apprentissage de cette position de la fenêtre glissante. Quelle que soit la durée des « trous » en entrée du récepteur, il existe une position de la fenêtre glissante à partir de laquelle le taux d'erreur binaire se stabilise, à un niveau sensiblement égal (éventuellement légèrement plus élevé, une légère pénalité résiduelle pouvant subsister) à celui obtenu lorsque le récepteur fonctionne en mode « continu ». A partir de cette position, dans laquelle les coefficients de l'égaliseur se stabilisent, on peut considérer que les phénomènes transitoires n'affectent plus le processus d'égalisation, et permettent d'atteindre un taux d'erreur binaire satisfaisant pour les données extraites.

En conséquence, l'invention propose, pour améliorer la performance d'égalisation de canal en réception, d'utiliser le premier sous-ensemble de symboles d'apprentissage qui donne un taux d'erreur binaire le plus faible possible, inférieur à un seuil déterminé, au lieu d'utiliser tous les symboles d'apprentissage de la séquence d'apprentissage.

Selon un aspect, ce seuil déterminé correspond sensiblement au taux d'erreur binaire calculé lorsque le premier module de réception fonctionne en mode de réception continue.

L'invention concerne encore un procédé de contrôle d'un réseau optique comprenant une pluralité de nœuds sources et de nœuds destinataires. Un tel procédé comprend une étape de détermination, pour l'un au moins des nœuds sources, d'une longueur d'onde source et d'instants d'émission de rafales optiques de signaux de données multi-porteuses obtenu par modulation d'un signal source à la longueur d'onde source, en fonction d'un temps de trajet des rafales de données entre le nœud source et l'un des nœuds destinataires, associé à la longueur d'onde source. Une rafale de données comprend, outre des symboles de données utiles, une séquence de symboles d'apprentissage comprenant une pluralité de symboles d'apprentissage.

Selon l'invention, l'étape de détermination comprend également la détermination d'une taille de ladite séquence de symboles d'apprentissage desdites rafales de données mono-bande.

L'invention concerne également un produit programme d'ordinateur comprenant des instructions de code de programme pour la mise en œuvre d'un tel procédé de contrôle, lorsqu'il est exécuté par un processeur.

L'invention concerne encore un procédé d'émission de données dans un réseau optique comprenant une pluralité de nœuds sources et de nœuds destinataires. Un tel procédé comprend une étape de génération d'un signal optique multi-porteuses de données obtenu par modulation d'un signal source à une longueur d'onde source et une étape d'émission du signal optique multi-porteuses de données sous forme de rafales de données mono-bande pouvant être associées à des longueurs d'onde source distinctes. Une rafale de données mono-bande comprend, outre des symboles de données utiles, une séquence de symboles d'apprentissage comprenant une pluralité de symboles d'apprentissage.

Selon l'invention, un tel procédé d'émission comprend :
- une étape de réception de signaux de commande comprenant une information relative à un instant d'émission des rafales de données mono-bande, une information relative à une longueur d'onde source à utiliser pour l'émission des rafales de données mono-bande, et une information relative à une taille de la séquence de symboles d'apprentissage des rafales de données mono-bande.

En outre, l'étape de génération comprend une adaptation de la taille de la séquence de symboles d'apprentissage des rafales de données mono-bande en fonction de l'information reçue.

L'invention concerne également un produit programme d'ordinateur comprenant des instructions de code de programme pour la mise en œuvre d'un tel procédé d'émission, lorsqu'il est exécuté par un processeur.

L'invention concerne enfin un procédé de réception de données dans un réseau optique comprenant une pluralité de nœuds sources et de nœuds destinataires. Un tel procédé comprend une étape de réception de rafales optiques d'un signal multi-porteuses de données, obtenu par modulation d'un signal source à une longueur d'onde source, une rafale comprenant, outre des symboles de données utiles, une séquence de symboles d'apprentissage comprenant une pluralité de symboles d'apprentissage. Une telle réception met en œuvre une égalisation de canal comprenant une étape de calcul de coefficients d'égalisation de canal à partir de la séquence de symboles d'apprentissage.

Selon l'invention, un tel procédé de réception comprend également une étape de réception de signaux de commande comprenant une information relative à une taille de la séquence de symboles d'apprentissage des rafales de données mono-bande, et l'égalisation de canal tient compte de l'information relative à une taille de la séquence de symboles d'apprentissage pour le calcul des coefficients d'égalisation.

L'invention concerne également un produit programme d'ordinateur comprenant des instructions de code de programme pour la mise en œuvre d'un tel procédé de réception, lorsqu'il est exécuté par un processeur.

L'invention concerne enfin un signal de commande d'un nœud source dans un réseau optique comprenant une pluralité de nœuds sources et de nœuds destinataires. Un tel signal de commande comprend une information relative à une longueur d'onde source et une information relative à des instants d'émission par le nœud source de rafales optiques de signaux de données multi-porteuses obtenus par modulation d'un signal source à la longueur d'onde source.

Selon l'invention, une rafale de données comprenant, outre des symboles de données utiles, une séquence de symboles d'apprentissage comprenant une pluralité de symboles d'apprentissage, le signal de commande comprend également une information relative à une taille de la séquence de symboles d'apprentissage des rafales de données mono-bande.

L'invention vise également un support d'enregistrement lisible par un ordinateur sur lequel est enregistré un programme d'ordinateur comprenant des instructions de code de programme pour l'exécution des étapes de l'un des différents procédés selon l'invention tels que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- les **figures 1A et 1B** illustrent les différentes étapes du traitement numérique du signal OFDM implémenté côté émetteur **(****fig. 1A****)** et côté récepteur **(****fig. 1B****)** dans un réseau optique de type TISA;
- la **figure 2** présente des courbes de taux d'erreur binaire (BER) en fonction du rapport signal sur bruit optique (OSNR) mesurées pour une trame OFDM 16QAM reçue en entrée d'un récepteur après différentes durées d'absence de signal;
- la **figure 3** illustre un exemple de réseau optique de type TISA, dans lequel peut être mise en œuvre l'invention ;
- la **figure 4** présente un exemple de réalisation de l'égalisation de canal dans l'un des nœuds destinataires 2-1 à 2-5 et 1-i de la **figure 3****;**
- la **figure 5** présente des courbes de taux d'erreur binaire obtenus pour chacune des positions successives de la fenêtre glissante SW utilisée dans le processus d'égalisation de la **figure 4** ;
- la **figure 6** illustre sous forme d'organigramme les différentes étapes mises en œuvre dans le récepteur d'un nœud destinataire de la **figure 3****,** selon un mode de réalisation de l'invention ;
- la **figure 7** présente des courbes de taux d'erreur binaire BER en fonction du rapport signal à bruit optique OSNR à 0,1nm, pour différentes durées de « trous », associées à différentes positions de la fenêtre glissante de symboles d'apprentissage, dans le mode de réalisation de la **figure 4** ;
- la **figure 8** illustre sous forme d'organigramme simplifié, les différentes étapes mises en œuvre dans l'unité de contrôle UC du réseau TISA de la **figure 3** ; et
- les **figures 9** **et** **10** illustrent sous forme de schémas blocs la structure matérielle d'un nœud source et d'un nœud destinataire selon un mode de réalisation de l'invention.

### 5. Description détaillée de modes de réalisation de l'invention

Le principe général de l'invention repose sur l'adaptation dynamique de la taille (exprimée en nombre entiers de symboles d'apprentissage, ou en durée) de la séquence d'apprentissage des trames OFDM transmises dans un réseau optique mettant en œuvre une transmission par rafales de signaux multi-porteuses, afin d'améliorer l'égalisation de canal réalisée par les récepteurs, et d'optimiser le débit utile. Une telle adaptation dynamique repose sur la mise en œuvre d'un plan de commande amélioré, élaboré par une unité de contrôle centralisée.

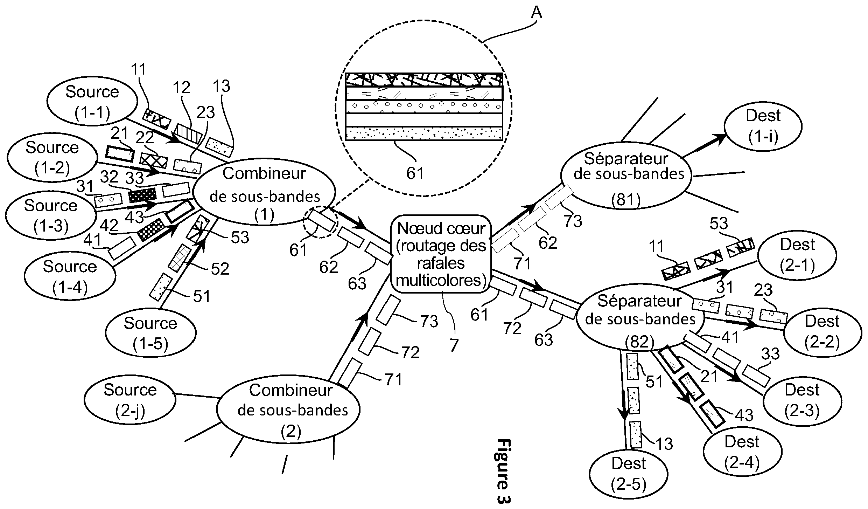

On présente tout d'abord, en relation avec la **figure 3****,** un exemple de réseau optique de type TISA, dans lequel peut être mis en œuvre l'invention. On notera que l'invention n'est pas limitée à ce type de réseau optique mais peut, plus généralement, trouver application dans tout type de réseau optique dans lequel les données sont transmises sous forme de rafales de signaux multi-porteuses.

A titre d'exemple, l'invention peut être mise en œuvre dans un réseau de type TWIN dans lequel la modulation utilisée est de type OFDM (pour « Orthogonal Frequency Division Multiplexing »), et donc dans lequel des rafales multi-porteuses mono-bande OFDM (i.e. utilisant une seule bande de fréquences, par exemple de 50 GHz) sont transmises sur des longueurs d'onde associées aux nœuds destinataires d'un tel réseau TWIN.

Dans la suite, on se place cependant, pour la description d'un mode de réalisation particulier de l'invention, dans le cadre d'un réseau TISA dans lequel des rafales multi-porteuses multi-bandes OFDM (aussi désignées par « MB-OFDM », par exemple constituées de 4 signaux OFDM mono-bande indépendants utilisant des sous-bandes de fréquences distinctes au sein d'une même bande de fréquences, par exemple de 50 GHz) sont transmises sur des sous-bandes spectrales associées aux nœuds destinataires d'un tel réseau TISA.

Un tel réseau optique comprend un ensemble de nœuds sources, parmi lesquels on a plus particulièrement représenté, à titre d'exemple, des sources référencées 1-1, 1-2, 1-3, 1-4, 1-5 et 2-j. Chacune de ces sources émet des rafales de données mono-bande OFDM, dont trois ont été représentées schématiquement pour chaque source. On notera que, pour simplifier le schéma de la **figure 3**, seul un sens de transmission a été représenté mais les deux sens sont bien sûr normalement présents et peuvent être utilisés.

Ainsi, la source référencée 1-1 émet trois rafales mono-bande OFDM successives, respectivement référencées 11, 12 et 13 ; la source référencée 1-2 émet trois rafales mono-bande OFDM successives référencées 21, 22 23 ; la source référencée 1-3 émet trois rafales mono-bande OFDM successives référencées 31, 32, 33 ; la source référencée 1-4 émet trois rafales mono-bande OFDM successives référencées 41, 42 43 ; la source référencée 1-5 émet trois rafales mono-bande OFDM successives référencées 51, 52, 53.

Pour une source donnée, les rafales successives peuvent présenter des longueurs d'onde sources différentes, comme illustré schématiquement par la trame de fond différente de ces rafales, qui représente une coloration différente du signal émis. Ces longueurs d'onde sources sont chacune associées à un nœud destinataire, auquel sont destinées les rafales de données.

Chacune des sources 1-1 à 2-j émet sur une sous-bande spectrale associée à un des nœuds destinataires 2-1 à 2-5 à un instant donné.

Le réseau de la **figure 3** comprend également deux éléments de routage, référencés 1 et 2, et appelés combineurs de sous-bandes. Ainsi, le combineur de sous-bandes 1 reçoit les rafales de données mono-bande 11-13, 21-23, 31-33, 41-43, 51-53 en provenance des nœuds sources 1-1 à 1-5, et les combine en rafales de données multi-bandes OFDM référencées 61 à 63. Par souci de simplification du schéma de la **figure 3**, ces rafales 61 à 63 ont été représentées avec une trame de fond blanche, mais il faut comprendre que chacune de ces rafales correspond à la juxtaposition des rafales mono-bande OFDM reçues des sources 1-1 à 1-5, comme illustré par le zoom A sur la rafale de données multi-bandes OFDM 61. On note ainsi que la rafale 61 occupe une bande spectrale obtenue par juxtaposition des bandes spectrales des rafales 11, 21, 31, 41 et 51, et correspond à la combinaison de ces cinq rafales mono-bande.

En d'autres termes, les éléments de réseau appelés « combineur de sous-bandes » combinent (à l'aide de coupleurs passifs) les N (ici N=5 pour l'élément 1) bandes OFDM qui constituent les canaux multi-bandes OFDM.

De façon à éviter les collisions dans le réseau et à effectuer une recombinaison correcte des canaux multi-bandes OFDM au niveau du « combineur de sous-bandes », un plan de commande élaboré doit être mis en œuvre.

Ce plan de commande est constitué par une unité de contrôle centralisée (lorsqu'elle est mise en œuvre), des unités de contrôle dédiées aux équipements (notamment des nœuds sources), un canal de contrôle qui les interconnecte et les messages échangés sur ce canal de contrôle. Ce plan de commande prend en compte les temps de trajet entre les éléments du réseau, par exemple par mécanisme de synchronisation externe et échange d'estampilles temporelles (timestamps), ou par processus de ranging (vérification et mise à jour des temps de propagation entre les éléments de réseau, qu'il s'agisse des nœuds sources, nœuds intermédiaires ou nœuds destinataires). En d'autres termes, le plan de commande concerne l'ensemble des matériels et opérations nécessaires à la commande du réseau.

Ce plan de commande met en œuvre des échanges de messages entre les nœuds sources, les nœuds destinataires et les unités de contrôles pour informer du besoin de communication des nœuds sources, de l'occupation des récepteurs dans les nœuds destinataires ou les nœuds sources. Par exemple, par un envoi périodique de rapports vers l'unité de contrôle (de préférence centralisée), les nœuds sources informent de l'état de leurs files d'attente, tandis que les unités de contrôle informent les nœuds sources des dates auxquelles ils peuvent émettre vers les nœuds destinataires. Dans un autre exemple, l'unité de contrôle reçoit une requête de bande passante entre plusieurs éléments du réseau par l'intermédiaire d'un plan de commande d'un équipement client (par exemple requête GMPLS (pour « Generalized Multi-Protocol Label Switching ») provenant de routeurs).

Un tel plan de commande peut être mis en œuvre dans une unité de contrôle centralisée contrôlant l'ordonnancement des rafales de données à destination de l'ensemble des nœuds destinataires. Une telle unité de contrôle gère toutes les réservations en attribuant à chaque nœud source des ressources à utiliser pour transmettre des rafales de données à une destination quelconque. Elle indique aux nœuds sources à quels instants ils doivent émettre, en utilisant un mécanisme de requêtes et d'autorisations (ou « requests » et « grants »).

L'unité de contrôle met en œuvre des algorithmes de calcul pour déterminer les instants d'émission et de réception et attribuer des autorisations d'envoi de rafales avec des messages d'autorisation d'émission aux nœuds sources.

Ce plan de commande doit avoir connaissance des temps de trajet entre les différents éléments de réseau de façon à décider des moments adéquats pour l'émission des rafales mono-bande OFDM.

Dans le cadre de l'invention, un tel plan de commande alloue au mieux les « time slots » des rafales et les bandes OFDM sur lesquelles les transmettre, et gère les nœuds sources afin que ces nœuds sources émettent les rafales dans les « time slots » et les bandes OFDM ainsi alloués, pour que les rafales MB-OFDM soient combinées parfaitement au niveau des combineurs de bandes 1 et 2 de la **figure 3****.**

Les messages échangés entre le nœud source et l'unité de contrôle comprennent diverses informations, parmi lesquelles par exemple une information quant à la largeur de bande utilisée par un nœud source.

Cette information comprend par exemple le numéro de la porteuse optique, mais aussi des informations concernant le nombre de sous porteuses, le format de modulation, les paramètres liés au FEC, et éventuellement d'autres informations liées au mode de réalisation de l'OFDM telles que le préfixe cyclique, les sous-porteuses pilotes, des symboles d'apprentissage.

Ces informations permettent notamment à l'unité de contrôle de calculer la durée des rafales. L'unité de contrôle peut aussi utiliser ces informations pour informer un nœud destinataire en réception du type de signal OFDM qu'il doit recevoir et de l'instant à laquelle il doit le recevoir, pour que le récepteur du nœud destinataire puisse ajuster éventuellement ses paramètres en prévision de la réception. Dans ce cas, le plan de commande inclut des messages dits « de réglage » envoyés par l'unité de contrôle vers le nœud destinataire, ce message comprenant des paramètres de réglage en réception.

Dans un autre mode de réalisation, l'émission par un nœud source sur une bande donnée peut avoir des caractéristiques de transmission différentes (en termes de nombre de sous porteuses, format de modulation et débits) d'une rafale à l'autre, et ce pour un même nœud destinataire ou pour des nœuds destinataires différents. L'unité de contrôle peut être à l'origine des changements de caractéristiques, par exemple pour prendre en compte des conditions de transmission variables ou pour ajuster le débit à la charge.

Dans ce cas, les messages de requête intègrent les paramètres permettant à l'unité de contrôle de faire ses calculs d'autorisation, notamment l'instant d'émission, mais aussi le débit, le format de modulation, les sous-porteuses, ... Les messages d'autorisation intègrement également ces paramètres pour que l'adaptation des rafales soit faite selon les calculs de l'unité de contrôle. Enfin, des messages supplémentaires peuvent avantageusement être transmis vers les nœuds destinataires afin que leurs récepteurs puissent s'adapter en fonction de ces paramètres.

Notamment, dans le cadre de l'invention, ces messages comprennent la taille de la séquence d'apprentissage des signaux multi-porteuses OFDM émis sous forme de rafales par les nœuds sources.

Les rafales de données MB-OFDM issues des combineurs de sous-bandes 1 et 2 sont ensuite routées jusqu'à un nœud cœur, qui est un nœud de routage de rafales multi-bandes OFDM, référencé 7 ; un tel nœud cœur est similaire aux nœuds utilisés dans la solution TWIN de l'art antérieur. En effet, dans le mode de réalisation de l'invention illustré en **figure 3****,** l'infrastructure optique pour le transport et le routage peut être la même que celle d'une solution TWIN classique, telle que décrite notamment par A. Triki, et al. dans "Efficient control plane for passive optical burst switching network", ICOIN 2013, pp. 535-540***.*** De tels nœuds cœur 7 peuvent être constitués de démultiplexeurs avec une grille spectrale fixe ou alors de commutateurs sélectifs en longueur d'onde (WSS : Wavelength Selective Switch) de façon à permettre une reconfiguration (lente) du réseau notamment dans le cas de scénarios de protection du trafic véhiculé par le réseau. Les démultiplexeurs et/ou les WSS sont associés à des longueurs d'onde pour réaliser la fonction d'aiguillage du nœud cœur.

De tels nœuds cœur 7 aiguillent les rafales MB-OFDM en fonction de leur couleur, i.e. de leurs longueurs d'onde. Ainsi, parmi les rafales 61, 62 et 63 reçues du combineur 1, les rafales 61 et 63 sont aiguillées vers un séparateur de sous-bandes 82, pour desservir un ensemble de nœuds destinataires 2-1 à 2-5 et la rafale 62 est aiguillée vers un séparateur de sous-bandes 81 pour desservir un ensemble de nœuds destinataires 1-i. De même, parmi les rafales 71, 72 et 73 reçues du combineur de sous-bandes 2, les rafales 71 et 73 sont aiguillées vers le séparateur de sous-bandes 81 et la rafale référencée 72 est aiguillée vers le séparateur de sous-bandes 82.

De tels séparateurs de sous-bandes 81 et 82 sont constitués de filtres très sélectifs en longueurs d'onde (largeur de 10 GHz par exemple) utilisés dans les solutions multi-bandes OFDM. Ces filtres peuvent être implémentés au moyen d'une technologie « optique en espace libre » (avec réseau de diffraction et monochromateur), ou bien alors d'une technologie de type LCoS (Liquid Crystal on Silicon) plus compacte combinant réseau de diffraction et matrice de pixels LCoS pour l'aiguillage, ces technologies étant largement utilisées par les industriels aujourd'hui.

En sortie du séparateur de sous-bandes 82, chacune des rafales MB-OFDM 61, 72 et 63 est à nouveau séparée en cinq rafales mono-bande OFDM, qui, en fonction de leur longueur d'onde, sont aiguillées vers l'un des nœuds destinataires 2-1 à 2-5. On retrouve ainsi les rafales référencées 11 et 53, aiguillées vers le récepteur 2-1 ; les rafales référencées 31 et 23, aiguillées vers le récepteur 2-2 ; les rafales référencées 41 et 33, aiguillées vers le récepteur 2-3 ; les rafales référencées 21 et 43, aiguillées vers le récepteur 2-4 ; les rafales référencées 51 et 13, aiguillées vers le récepteur 2-5.

Ainsi, dans le réseau de la **figure 3****,** les rafales multi-bandes OFDM sont vues et traitées comme des rafales multicolores avec deux étages de démultiplexage.

On notera que le système illustré en **figure 3** peut s'appliquer à un réseau comprenant des nœuds de bord (nœuds « edge »), ainsi qu'éventuellement des nœuds de cœur de réseau. Les nœuds de bord peuvent contenir une seule source ou plusieurs sources (côté émission) et un récepteur ou plusieurs récepteurs (côté réception) tels qu'illustrés en **figure 3**, sachant que pour assurer une communication bidirectionnelle les nœuds de bord contiennent une partie émission et une partie réception. Les nœuds de cœur de réseau correspondent aux fonctions de combinaison et/ou d'aiguillage passif (sans conversion O/E/O) dans un tel réseau, implémentées par le combineur de sous-bandes, le nœud cœur (routage des rafales multicolores) et le séparateur de sous-bandes illustrés en **figure 3****.**

Le réseau de la **figure 3** repose sur une solution avec accord à la source, dans laquelle le laser utilisé pour chaque bande du signal multi-bandes OFDM est accordable de façon à émettre chaque rafale sur la longueur d'onde du récepteur de destination.

Comme exposé précédemment, les nœuds destinataires 2-1 à 2-5 ne sont pas assurés de recevoir un flux de symboles en continu, du fait que le trafic est émis sous forme de rafales. Quand le récepteur de l'un de ces nœuds destinataires ne reçoit pas de données, seul le bruit à l'entrée du récepteur est présent : on parle de « trou » ou « gap » ou « absence de signal ». Comme le récepteur est conçu pour recevoir des flux de signaux en continu, les rafales OFDM reçues à l'entrée du récepteur après un « trou » subissent, au moins sur les premières nanosecondes, une distorsion, due aux phénomènes de réponse transitoire des composants opto-électroniques embarqués dans le récepteur.

Pour compenser ces phénomènes de distorsion, et améliorer l'égalisation de canal dans le récepteur, la solution de l'invention repose sur un accroissement de la taille de la séquence d'apprentissage, par rapport aux solutions de l'art antérieur. Cette taille est cependant adaptée en fonction de l'état du trafic dans le réseau, de la durée prévisionnelle des « trous » en entrée des différents nœuds destinataires, et ce, afin d'optimiser le débit utile dans le réseau.

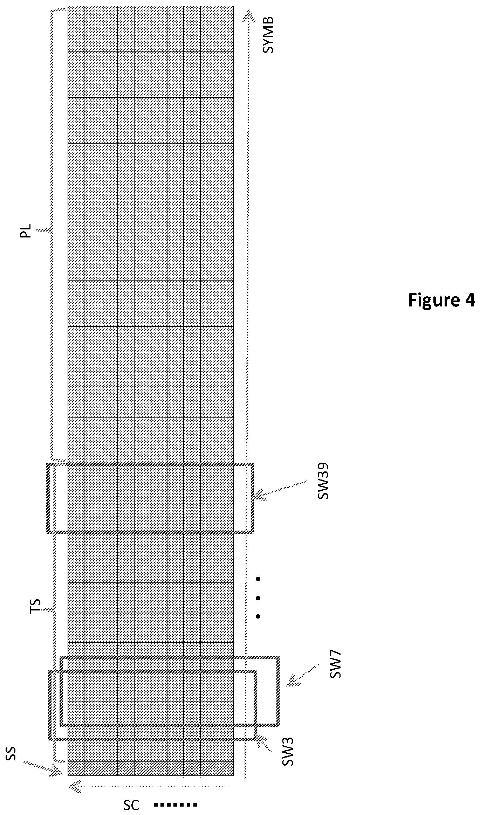

On présente désormais, en relation avec la **figure 4****,** un exemple de réalisation de l'égalisation de canal dans l'un des nœuds destinataires 2-1 à 2-5 (ou 1-i) de la **figure 3****.**

On suppose que, dans l'émetteur de l'un des nœuds sources 1-1 à 1-5, on construit des trames OFDM composées d'un symbole de synchronisation SS, cinquante symboles d'apprentissage TS et cent vingt symboles de données utiles, regroupés dans une payload PL. De cette façon, on forme une trame de 4,7 microsecondes, donc de même durée que dans un mode de fonctionnement classique, dans lequel une trame OFDM comporte un symbole de synchronisation SS, quatorze symboles d'apprentissage TS et cent cinquante-six symboles de données utiles.

Le traitement numérique du signal (DSP) mis en œuvre dans le récepteur est identique à celui décrit précédemment en relation avec la **figure 1B****.** En revanche, au niveau de l'égaliseur 26, on calcule les coefficients d'égalisation moyennés à partir d'un sous-ensemble de douze symboles d'apprentissage successifs, par exemple du 3^{ème} au 14^{ème} symbole d'apprentissage TS. Ce nombre de douze symboles d'apprentissage TS pour le moyennage des coefficients de l'égaliseur est choisi pour augmenter la robustesse au bruit de l'égaliseur de canal. Une autre valeur paire (i.e. 8, 10, 14...) peut également être sélectionnée.

Dans l'exemple de la **figure 4****,** les colonnes représentent les symboles SYMB et les lignes représentent les sous-porteuses SC. La première colonne référencée SS représente le symbole de synchronisation. Les colonnes suivantes référencées TS représentent les symboles d'apprentissage, où un pavé représente cinq symboles d'apprentissage ; les dernières colonnes référencées PL représentent les symboles de données utiles (autrement appelées « payload »), où un pavé représente douze symboles. Les rectangles référencés SW représentent différentes fenêtres glissantes de symboles d'apprentissage, au sein de la séquence d'apprentissage TS. Dans cet exemple, une fenêtre SW a une taille de douze symboles d'apprentissage, et la position du premier symbole de la fenêtre est nommée « position de commencement » (en anglais « starting position »), et donne son nom à la fenêtre. Ainsi, la fenêtre SW3 représente la fenêtre du 3^{ème} au 14^{ème} symbole d'apprentissage, la fenêtre SW7 représente la fenêtre du 7^{ème} au 18^{ème} symbole d'apprentissage, et ainsi de suite. Entre deux fenêtres SW adjacentes, on choisit par exemple quatre symboles d'apprentissage de décalage. Dans d'autres implémentations, on pourrait choisir un nombre de symboles d'apprentissage de décalage plus ou moins important.

Ainsi, selon un mode de réalisation de l'invention, on commence, au cours d'une première étape, par calculer les coefficients d'égalisation moyennés en s'appuyant sur les symboles d'apprentissage d'un premier sous-ensemble SW3. On calcule ensuite le taux d'erreur binaire affectant les données extraites du récepteur en utilisant les coefficients d'égalisation ainsi calculés. Ce taux d'erreur binaire est mémorisé dans une mémoire temporaire du récepteur.

On réitère ces étapes, pour la même trame, en utilisant un autre sous-ensemble de douze symboles d'apprentissage, décalés de quatre symboles d'apprentissage par rapport au sous-ensemble SW3, à savoir le sous-ensemble référencé SW7, comprenant les symboles de la séquence d'apprentissage TS, du 7^{ème} au 18^{ème}. A partir des coefficients d'égalisation calculés sur la base de ce sous-ensemble SW7, on calcule à nouveau le taux d'erreur binaire affectant les données extraites du récepteur sur la base de ces coefficients d'égalisation. Ce taux d'erreur binaire est à nouveau consigné dans une mémoire temporaire du récepteur.

On procède ainsi par itérations successives, en décalant à chaque fois la fenêtre glissante SW de quatre symboles d'apprentissage TS, et ce, jusqu'à atteindre la fin de la séquence d'apprentissage.

Les résultats des taux d'erreur binaire obtenus pour chacune des positions successives de la fenêtre glissante SW sont illustrés en **figure 5**. Comme pour la **figure 2**, on considère un signal multi-porteuses OFDM avec modulation 16QAM.

Sur cette **figure 5**, la courbe marquée d'étoiles correspond au taux d'erreur binaire affectant les données, en fonction de la position de la fenêtre glissante SW, lorsque le récepteur du nœud destinataire fonctionne en mode continu. Dans ce mode de fonctionnement continu, les taux d'erreur binaire restent sensiblement constants, quelle que soit la position de la fenêtre glissante SW utilisée au sein de la séquence d'apprentissage. En effet, la trame ne subit pas de distorsion en mode continu, qui ne génère pas de phénomènes de réponse transitoire néfastes des composants opto-électroniques.

Les courbes marquées de carrés, de losanges, de triangles et de ronds représentent respectivement les résultats mesurés pour un fonctionnement du récepteur en mode « rafales », avec des absences de signal, ou « trous », de 0,3µs, 5,3µs, 15,3µs et 50,3µs respectivement.

Une comparaison de ces différentes courbes permet de constater que le phénomène de distorsion se poursuit d'autant plus longtemps que la durée des « trous » est importante. Cependant, pour toutes ces courbes, on remarque qu'à partir d'une certaine position de la fenêtre glissante SW, le taux d'erreur binaire se stabilise autour d'une valeur sensiblement égale à celle du taux d'erreur binaire en fonctionnement du récepteur en mode continu.

Afin d'améliorer la performance du récepteur, la solution de l'invention consiste, au lieu d'utiliser tous les symboles d'apprentissage de la séquence d'apprentissage TS pour calculer les coefficients de l'égaliseur, à n'utiliser que le premier sous-ensemble SW de douze symboles d'apprentissage qui donne le taux d'erreur binaire le plus faible possible. En variante, on peut choisir un seuil de taux d'erreur binaire, à partir duquel on estime que la distorsion est suffisamment faible pour être négligée, et sélectionner le sous-ensemble de symboles d'apprentissage permettant d'atteindre ce seuil de taux d'erreur binaire. Dans un mode de réalisation préférentiel, on choisit de retenir le sous-ensemble de symboles d'apprentissage avec lequel on obtient un taux d'erreur binaire sensiblement égal à celui obtenu pour un fonctionnement du récepteur en mode continu.

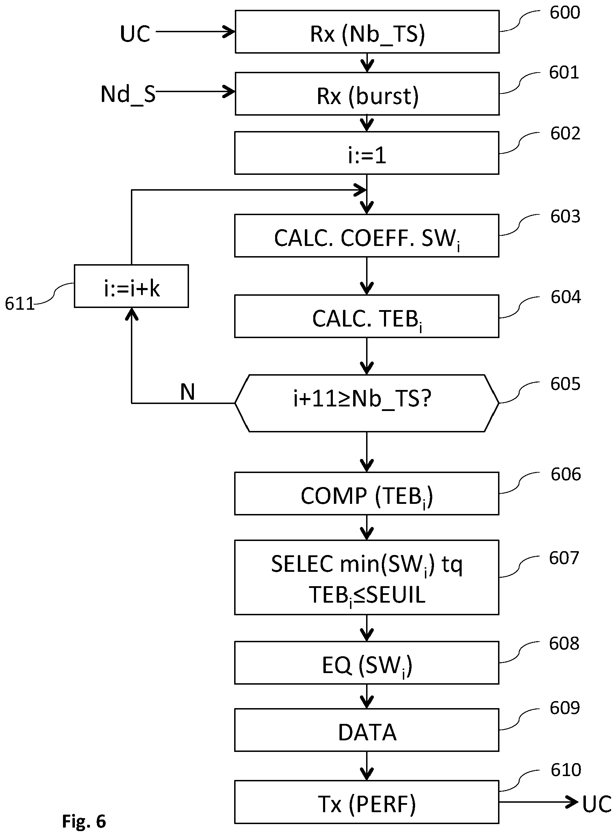

La **figure 6** illustre sous forme d'organigramme les différentes étapes mises en œuvre dans le récepteur d'un nœud destinataire de la **figure 3**, selon un mode de réalisation de l'invention.

Au cours d'une étape référencée 600, le module de réception de l'un des nœuds destinataires 2-1 à 2-5 reçoit des informations en provenance de l'unité de contrôle UC du réseau, et notamment la taille de la séquence d'apprentissage TS contenues dans les trames OFDM des rafales de données qu'il va recevoir, typiquement exprimée sous la forme du nombre de symboles d'apprentissage Nb_TS contenus dans cette séquence d'apprentissage TS. En variante, la taille de la séquence d'apprentissage peut être exprimée en durée, exprimée en unité de mesure temporelle, laquelle peut être convertie, par le nœud destinataire, en un nombre de symboles d'apprentissage Nb_TS. Cette information est par exemple contenue dans un message dit « de réglage » envoyé par l'unité de contrôle vers le nœud destinataire, comprenant des paramètres de réglage en réception, tels que le type de signal OFDM qu'il doit recevoir et la date à laquelle il doit le recevoir.

A réception 601 d'une rafale de données en provenance d'un nœud source Nd_S, le récepteur du nœud destinataire met en œuvre un processus itératif d'égalisation de canal. Comme décrit précédemment, ce processus itératif est initialisé (étape 602) pour une position de commencement i=1 correspondant au premier symbole d'apprentissage de la séquence d'apprentissage de la trame OFDM reçue. Au cours d'une étape 603, le récepteur calcule les coefficients d'égalisation de canal, selon une méthode connue, mais sur un sous-ensemble SWᵢ de douze symboles d'apprentissage commençant en position i. Il calcule ensuite 604 le taux d'erreur binaire affectant les données obtenues en sortie de la chaîne de traitement numérique de la **figure 1A** en utilisant les coefficients d'égalisation de canal calculés à l'étape 603.

Au cours d'une étape 605, on teste si l'on a atteint la fin de la séquence d'apprentissage, en fonction du nombre de symboles d'apprentissage Nb_TS communiqué par l'unité de contrôle UC à l'étape 600. Si ce n'est pas le cas, les étapes 603 à 605 sont réitérées pour une nouvelle position de la fenêtre glissante SWᵢ, décalée d'un nombre prédéterminé k de symboles d'apprentissage (étape 611) par rapport à sa position précédente. Ce décalage (i=i+k) peut notamment être de 2 symboles d'apprentissage (i=i+2) lorsqu'une polarisation duale est utilisée (les symboles d'apprentissage étant ajoutés par groupe de deux), voire d'un seul symbole d'apprentissage (i=i+1) lorsque des signaux OFDM à polarisation simple sont employés.

Si la fin de la séquence d'apprentissage est atteinte, le récepteur procède à une comparaison des taux d'erreur binaire obtenus pour chaque position i de la fenêtre glissante SWᵢ au cours d'une étape 606. Il sélectionne ensuite (607) la première position de fenêtre glissante SWᵢ qui permet d'atteindre un taux d'erreur binaire TEBᵢ inférieur à un seuil déterminé, qui peut correspondre au taux d'erreur binaire obtenu pour un fonctionnement du récepteur en mode continu. Il procède alors à l'égalisation de canal 608 en utilisant les coefficients d'égalisation calculés à partir des symboles d'apprentissage du sous-ensemble retenu à l'étape précédente, et obtient ainsi des données DATA au cours d'une étape 609.

Le module d'émission du récepteur transmet alors (610) à l'unité de contrôle UC, une information relative à la performance (par exemple le taux d'erreur binaire) des données qu'il a extraites, pour cette rafale particulière, et cette taille particulière de la séquence d'apprentissage. Il peut notamment faire remonter à l'unité de contrôle UC la position i de la fenêtre de symboles d'apprentissage qu'il a utilisée pour l'égalisation de canal 608.

Cette information peut être utilisée par l'unité de contrôle UC pour adapter la taille de la séquence d'apprentissage à insérer dans les prochaines trames OFDM à destination de ce nœud destinataire, comme on le verra plus en détail par la suite.

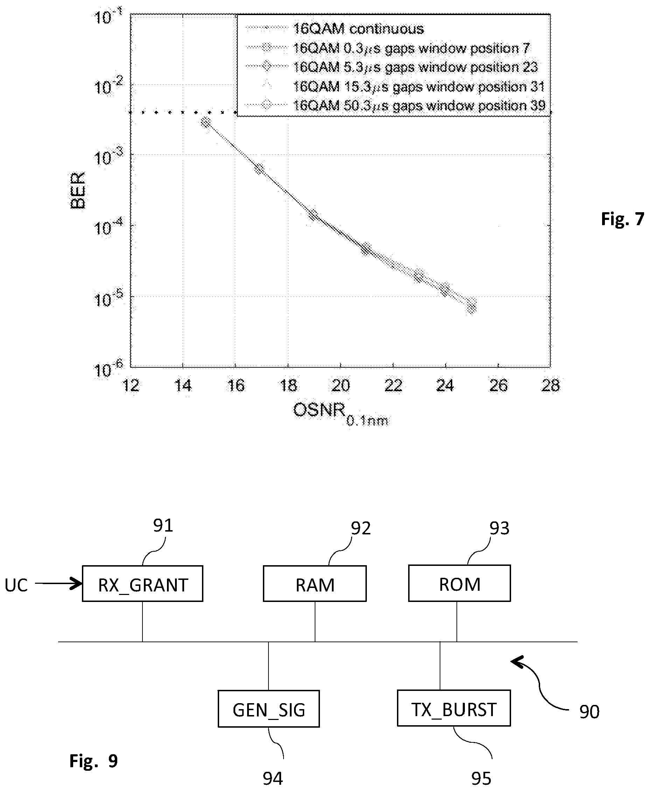

La **figure 7** permet d'illustrer la performance de cette méthode de calcul des coefficients d'égalisation de canal et présente les courbes de taux d'erreur binaire BER en fonction du rapport signal à bruit optique OSNR (« Optical Signal to Noise Ratio ») à 0,1nm, pour différentes durées de « trous », associées à différentes positions de la fenêtre glissante de symboles d'apprentissage. Comme précédemment, on considère un signal multi-porteuses OFDM avec modulation 16QAM.

La courbe marquée de points correspond à la courbe obtenue pour un fonctionnement du récepteur en mode continu. La courbe marquée de carrés représente les résultats de taux d'erreur binaire mesurés pour un fonctionnement du récepteur en mode « rafales », avec des trous d'une durée de 0,3µs et en utilisant la fenêtre glissante SW7, qui commence au 7^{ème} symbole TS de la séquence d'apprentissage. La courbe marquée de losanges représente les résultats de taux d'erreur binaire mesurés pour un fonctionnement du récepteur en mode « rafales », avec des trous d'une durée de 5,3µs et en utilisant la fenêtre glissante SW23, qui commence au 23^{ème} symbole TS de la séquence d'apprentissage. La courbe marquée de triangles représente les résultats de taux d'erreur binaire mesurés pour un fonctionnement du récepteur en mode « rafales », avec des trous d'une durée de 15,3µs et en utilisant la fenêtre glissante SW31, qui commence au 31^{ème} symbole TS de la séquence d'apprentissage. Enfin, la courbe marquée de ronds représente les résultats de taux d'erreur binaire mesurés pour un fonctionnement du récepteur en mode « rafales », avec des trous d'une durée de 50,3µs et en utilisant la fenêtre glissante SW39, qui commence au 39^{ème} symbole TS de la séquence d'apprentissage.

Par comparaison avec la courbe obtenue en mode de fonctionnement continu du récepteur, on constate que la performance exprimée en termes de taux d'erreur binaire est quasi-identique, en particulier dans le bas de la courbe (i.e. pour de forts OSNRs), où les imperfections de la chaîne de mesure sont les plus significatives : la différence de performance entre le mode continu et le mode rafales pour un taux d'erreur binaire de 2 × 10⁻⁵ est quasiment nulle.

La comparaison de ces résultats avec ceux illustrés en **figure 2** montre que la solution de l'invention est efficace pour gérer le problème de l'absence de signal, ou « trous » au niveau du récepteur dans le cas d'une transmission avec réception cohérente en mode rafale.

Une telle solution, qui consiste à accroître la taille de la séquence d'apprentissage, et à n'utiliser qu'un sous-ensemble de cette dernière pour l'égalisation de canal, par utilisation d'une fenêtre glissante, permet de faire fonctionner le récepteur OFDM à la fois en mode continu et en mode rafales, au prix d'une simple augmentation modérée de l'overhead (en-tête, incluant la séquence d'apprentissage). On économise ainsi les coûts de développement d'un récepteur qui serait spécifiquement conçu pour un fonctionnement en mode « rafales » avec des composants opto-électroniques optimisés, ou encore les coûts associés à la génération d'un signal de bourrage, tel que proposé précédemment dans l'art antérieur.

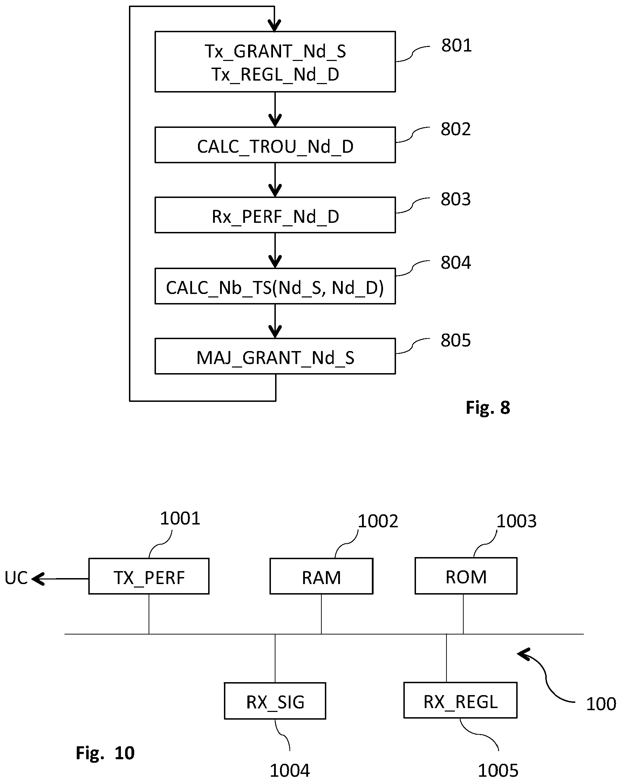

On présente désormais, en relation avec la **figure 8**, sous forme d'organigramme simplifié, les différentes étapes mises en œuvre dans l'unité de contrôle UC du réseau TISA de la **figure 3****.**

Les résultats expérimentaux obtenus à partir du procédé d'égalisation de la **figure 6** montrent qu'il n'est pas toujours nécessaire d'insérer cinquante symboles d'apprentissage TS dans la trame OFDM pour obtenir une performance satisfaisante en réception. La fenêtre glissante de symboles d'apprentissage SWᵢ peut se placer au milieu de la séquence d'apprentissage dans certaines situations : par exemple, pour une durée de trous de 15,3 microsecondes, les coefficients d'égalisation peuvent être obtenus pour une fenêtre glissante commençant à la position 31, pour obtenir la performance optimale. Il est donc avantageux de réduire le nombre de symboles d'apprentissage insérés, et ainsi améliorer le débit utile au sein du réseau, en adaptant dynamiquement la taille de la séquence d'apprentissage à l'aide du plan de commande établi par l'unité de contrôle UC (dans cet exemple, en la limitant à 42 symboles d'apprentissage).

On se place dans une configuration où l'unité de contrôle UC a transmis, au cours d'une étape 801, des signaux de commande GRANT aux nœuds sources Nd_S du réseau, ainsi que des signaux de réglage de réception REGL aux nœuds destinataires Nd_D. Comme indiqué précédemment, ces signaux contiennent différentes informations, relatives par exemple aux instants d'émission ou de réception des rafales de données, mais également, selon l'invention, une information relative aux nombre de symboles d'apprentissage Nb_TS insérés ou à insérer dans les trames OFDM (ou une information relative à la durée temporelle de la séquence d'apprentissage). Ces signaux GRANT et REGL peuvent être échangés entre l'unité de contrôle et les nœuds par l'intermédiaire d'un canal de contrôle dédié.

Dans un réseau TISA, le routage est fondé sur la longueur d'onde, et chaque longueur d'onde est associée à une destination, ou nœud destinataire. Le chemin de transmission d'un nœud source à un nœud destinataire est donc prévisible, et le temps de propagation entre la source et la destination peut être calculé par l'unité de contrôle. Comme les instants d'émission des rafales par les nœuds sources Nd_S sont contrôlés par le plan de commande, les instants de réception par les nœuds destinataires Nd_D, et donc la durée des « trous » entre les rafales au niveau d'un nœud destinataire Nd_D peut être prévue par le plan de commande, et calculée par l'unité de contrôle UC au cours d'une étape 802.

Par ailleurs, comme évoqué précédemment en relation avec la **figure 6**, les nœuds destinataires Nd_D peuvent donner à l'unité de contrôle UC un retour, ou feedback, sur les performances de chacune des rafales de données reçues. Cette information de performance est reçue par l'unité de contrôle UC au cours d'une étape 803. On notera qu'il s'agit là d'une technique classique et connue, de calcul de performances des données reçues, qui sont habituellement remontées au plan de commande et font l'objet d'une surveillance pour éventuellement générer des alarmes, par exemple lorsque les performances se dégradent. On ne décrira donc pas ici plus en détail cette étape, connue de l'art antérieur.

Ainsi, l'unité de contrôle peut contrôler précisément la transmission d'une rafale dans le réseau par un nœud sources Nd_S, puis obtenir sa performance, en provenance du nœud destinataire Nd_D.

A ce stade, l'unité de contrôle UC peut calculer 804 le nombre de symboles d'apprentissage Nb_TS nécessaires pour chaque lien (Nd_S, Nd_D) d'une source vers une destination, sur la base de la durée des trous, de la performance des rafales déjà reçues, et en fonction du nombre de symboles d'apprentissage qui avaient été insérées à l'émission dans ces rafales.

L'unité de contrôle peut alors mettre à jour 805 les signaux de commande, ou « grants », adressés aux nœuds sources Nd_S, et notamment le nouveau paramètre de taille de séquence d'apprentissage à utiliser, pour contrôler la structure de la trame OFDM insérée par les nœuds sources dans les rafales.

L'unité de contrôle peut alors à nouveau envoyer ces grants 801 aux nœuds sources, pour modifier le nombre de symboles d'apprentissage Nb_TS à insérer dans les trames OFDM, afin de les adapter aux différents liens point à point (de source Nd_S à destination Nd_D). On est ainsi assuré que les rafales ne contiennent que le nombre de symboles d'apprentissage nécessaires pour obtenir une performance optimale en réception, ce qui permet d'optimiser le débit utile du réseau.

On notera que le rythme de mise à jour des signaux de commande, ou grants, dépend de la variabilité du trafic, et peut être configuré en fonction de la taille du réseau, et des besoins. A titre d'exemple, on peut les modifier chaque milliseconde, selon le rythme de rafraîchissement choisi pour le plan de commande.

Les caractéristiques des rafales peuvent ainsi être adaptées à la charge du lien (jour, nuit, trafic chargé, trafic non chargé, etc.) pour atteindre une performance optimale et mieux utiliser les ressources réseau.

Cette solution trouve des applications avantageuses dans les réseaux optiques reposant sur une transmission en mode rafales, qui offrent une latence plus petite que les réseaux actuels reposant sur une commutation de circuits, notamment dans le cadre d'applications de type réseaux de « data-centers » (pour « centre de traitement de données ») (« inter et intra-data-centers ») et réseaux cœur 5G qui nécessitent des temps de reconfiguration rapides lorsque les demandes de ressources évoluent.

Les **figures 9** **et** **10** illustrent sous forme de schémas blocs la structure matérielle d'un nœud source Nd_S et d'un nœud destinataire Nd_D selon l'invention.

Comme illustré en **figure 9****,** un nœud source 90 comprend un module 91 de réception des signaux de commande RX_GRANT, un module 94 de génération d'un signal multi-porteuses OFDM de données GEN_SIG, et un module 95 d'émission de ce signal sous forme de rafales de données mono-bande TX_BURST.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Le module GEN_SIG 94 a notamment été décrit plus en détail précédemment en relation avec la **figure 1A****.** On pourra se référer au document de brevet WO2016/020602 pour un exemple de réalisation du module TX-BURST 95.

Plus généralement, un tel nœud source Nd_S 90 comprend une mémoire vive 92 (par exemple une mémoire RAM), un module de génération d'un signal multi-porteuses OFDM de données GEN_SIG 94 équipé par exemple d'un processeur, et piloté par un programme d'ordinateur, stocké dans une mémoire morte 93 (par exemple une mémoire ROM ou un disque dur). A l'initialisation, les instructions de code du programme d'ordinateur sont par exemple chargées dans la mémoire vive 92 avant d'être exécutées par le processeur du module GEN_SIG 94. De même, le module TX_BURST 95 d'émission du signal multi-porteuses OFDM sous forme de rafales de données peut être équipé par exemple d'un processeur, et piloté par un programme d'ordinateur, stocké dans la mémoire morte 93. A l'initialisation, les instructions de code du programme d'ordinateur sont par exemple chargées dans la mémoire vive 92 avant d'être exécutées par le processeur du module TX_BURST 95.

La mémoire vive 92 permet notamment de stocker temporairement les informations contenues dans les signaux de commande reçus par le module RX_GRANT 91, à savoir les instants d'émission des rafales de données par le module TX_BURST 95, ainsi que la longueur d'onde source et la taille de la séquence d'apprentissage à utiliser par le module de génération de signal GEN_SIG 94. D'autres informations telles que le débit ou le format peuvent également être contenues dans ces signaux de commande et ainsi stockées temporairement par la mémoire vive 92.

Les différents modules et composants du nœud source Nd_S 90 sont reliés par un bus de communication, qui permet l'échange de données et d'informations entre eux.

Comme illustré en **figure 10****,** un nœud destinataire 100 comprend un module 1001 de transmission d'informations de performance de réception TX_PERF à destination de l'unité de contrôle du réseau, un module 1004 de réception d'un signal multi-porteuses OFDM de données RX_SIG, et un module 1005 de réception de signaux de réglage de paramètres de réception RX_REGL.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Le module RX_SIG 1004 a notamment été décrit plus en détail précédemment en relation avec la **figure 1B****.**

Plus généralement, un tel nœud destinataire Nd_D 100 comprend une mémoire vive 1002 (par exemple une mémoire RAM), un module de réception d'un signal multi-porteuses OFDM de données RX_SIG 1004 équipé par exemple d'un processeur, et piloté par un programme d'ordinateur, stocké dans une mémoire morte 1003 (par exemple une mémoire ROM ou un disque dur). A l'initialisation, les instructions de code du programme d'ordinateur sont par exemple chargées dans la mémoire vive 1002 avant d'être exécutées par le processeur du module RX_SIG 1004. Ce module RX_SIG 1004 met notamment en œuvre le processus itératif d'égalisation de canal décrit précédemment en relation avec la **figure 6****,** et comprend donc des unités de calcul de coefficients d'égalisation de canal et de calcul de taux d'erreur binaire affectant les données. De même, le module TX_PERF 1001 d'émission d'informations de performance de réception des données vers l'unité de contrôle du réseau peut être équipé par exemple d'un processeur, et piloté par un programme d'ordinateur, stocké dans la mémoire morte 1003. A l'initialisation, les instructions de code du programme d'ordinateur sont par exemple chargées dans la mémoire vive 1002 avant d'être exécutées par le processeur du module TX_PERF 1001.

La mémoire vive 1002 permet notamment de stocker temporairement les informations contenues dans les signaux de réglage de réception reçus par le module RX_REGL 1005, à savoir les instants de réception des rafales de données par le module RX_SIG 1004, ainsi que la taille de la séquence d'apprentissage contenue dans les trames OFDM de ces rafales.

Les différents modules et composants du nœud destinataire Nd_D 100 sont reliés par un bus de communication, qui permet l'échange de données et d'informations entre eux.

## Revendications

1. Système d'émission de données dans un réseau optique comprenant une pluralité de nœuds sources (Nd_S ; 90 ; 1-1... 1-5) et de nœuds destinataires (Nd_D ; 100 ; 2-1...2-5),
un nœud source (Nd_S ; 90 ; 1-1... 1-5) étant apte à générer un signal optique multi-porteuses de données obtenu par modulation d'un signal source à une longueur d'onde source et à émettre ledit signal optique multi-porteuses de données sous forme de rafales de données mono-bande pouvant être associées à des longueurs d'onde source distinctes,
une rafale de données mono-bande comprenant, outre des symboles de données utiles (PL), une séquence de symboles d'apprentissage (TS) composée d'une pluralité de symboles d'apprentissage,
une unité de contrôle (UC), appartenant au plan de commande du réseau optique, étant configurée pour déterminer, pour l'un au moins desdits nœuds sources (Nd_S ; 90 ; 1-1... 1-5), des instants d'émission desdites rafales de données mono-bande et des longueurs d'onde sources à utiliser pour l'émission desdites rafales de données mono-bande, en fonction d'un temps de trajet desdites rafales de données entre ledit nœud source et l'un desdits nœuds destinataires (Nd_D ; 100 ; 2-1...2-5), associé à ladite longueur d'onde source,
**caractérisé en ce que** ladite unité de contrôle (UC) détermine également une taille de ladite séquence de symboles d'apprentissage (TS) desdites rafales de données mono-bande.

2. Système d'émission de données selon la revendication 1, **caractérisé en ce que** ladite unité de contrôle comprend un module d'émission de signaux de commande (GRANT) destinés auxdits nœuds sources et conformes audit plan de commande, comprenant :
- une information relative à un instant d'émission desdites rafales de données mono-bande ;
- une information relative à une longueur d'onde source à utiliser pour l'émission desdites rafales de données mono-bande ;
- une information (Nb_TS) relative à une taille de ladite séquence de symboles d'apprentissage desdites rafales de données mono-bande.

3. Système d'émission selon l'une quelconque des revendications 1 et 2, **caractérisé en ce que** ladite unité de contrôle comprend un module de calcul :
- d'une durée d'absence de signal en entrée d'au moins un desdits nœuds destinataires, en fonction desdits instants d'émission desdites rafales de données mono-bande par lesdits nœuds sources et desdits temps de trajet desdites rafales de données entre lesdits nœuds sources et ledit nœud destinataire ;
- de ladite taille de ladite séquence de symboles d'apprentissage desdites rafales de données mono-bande destinées audit nœud destinataire, en fonction de ladite durée d'absence de signal calculée.

4. Système d'émission de données selon la revendication 3, **caractérisé en ce que** ladite unité de contrôle comprend également un module de réception d'informations de performance de réception desdites rafales de données mono-bande en provenance desdits nœuds destinataires, **et en ce que** ledit module de calcul est apte à mettre à jour ladite taille de ladite séquence de symboles d'apprentissage desdites rafales de données mono-bande en fonction desdites informations de performance de réception reçues par ladite unité de contrôle.

5. Nœud optique source (Nd_D ; 100; 2-1...2-5) d'un réseau optique comprenant une pluralité de nœuds sources et de nœuds destinataires,
comprenant un module de génération (94) d'un signal optique multi-porteuses de données obtenu par modulation d'un signal source à une longueur d'onde source et un module d'émission (95) dudit signal optique multi-porteuses de données sous forme de rafales de données mono-bande pouvant être associées à des longueurs d'onde source distinctes,
une rafale de données mono-bande comprenant, outre des symboles de données utiles (PL), une séquence de symboles d'apprentissage (TS) composée d'une pluralité de symboles d'apprentissage,
ledit nœud source comprenant également un module de réception (91) de signaux de commande comprenant une information relative à un instant d'émission desdites rafales de données mono-bande et une information relative à une longueur d'onde source à utiliser pour l'émission desdites rafales de données mono-bande,
**caractérisé en ce que** lesdits signaux de commande (GRANT) comprennent également une information (Nb_TS) relative à une taille de ladite séquence de symboles d'apprentissage (TS) desdites rafales de données mono-bande,
**et en ce que** ledit module de génération (94) comprend des moyens d'adaptation de ladite taille de ladite séquence de symboles d'apprentissage desdites rafales de données mono-bande en fonction de ladite information reçue.

6. Nœud optique destinataire (Nd_D ; 100 ; 2-1...2-5) d'un réseau optique comprenant une pluralité de nœuds sources et de nœuds destinataires,
comprenant un premier module de réception (1004) de rafales d'un signal optique multi-porteuses de données, obtenu par modulation d'un signal source à une longueur d'onde source, une rafale de données comprenant, outre des symboles de données utiles (PL), une séquence de symboles d'apprentissage (TS) composée d'une pluralité de symboles d'apprentissage,
ledit premier module de réception (1004) comprenant un égaliseur de canal (116) comprenant des moyens de calcul de coefficients d'égalisation de canal à partir de ladite séquence de symboles d'apprentissage,
**caractérisé en ce que** ledit nœud destinataire comprend également un second module de réception (1005) de signaux de commande comprenant une information (Nb_TS) relative à une taille de ladite séquence de symboles d'apprentissage (TS) desdites rafales de données,
**et en ce que** ledit égaliseur de canal tient compte de ladite information relative à une taille de ladite séquence de symboles d'apprentissage pour le calcul desdits coefficients d'égalisation.

7. Nœud optique destinataire selon la revendication 6, **caractérisé en ce que** lesdits moyens de calcul desdits coefficients d'égalisation de canal sont des moyens de calcul itératifs mettant en œuvre :
- un calcul desdits coefficients d'égalisation de canal par moyennage sur un sous-ensemble de symboles d'apprentissage de ladite séquence d'apprentissage ;
- un calcul d'un taux d'erreur binaire affectant des données utiles obtenues en sortie dudit premier module de réception à partir desdits coefficients d'égalisation de canal calculés sur ledit sous-ensemble de symboles d'apprentissage ;
- un décalage dudit sous-ensemble de symboles d'apprentissage au sein de ladite séquence d'apprentissage ;
**en ce que** ledit égaliseur de canal (116) comprend des moyens de comparaison desdits taux d'erreur binaire calculés pour chacun desdits sous-ensembles de symboles d'apprentissage successifs et des moyens de sélection, en tant que coefficients d'égalisation à appliquer par ledit égaliseur de canal, des coefficients d'égalisation de canal obtenus par moyennage sur le premier desdits sous-ensembles de symboles d'apprentissage associés à un taux d'erreur binaire calculé inférieur à un seuil déterminé.

8. Nœud optique destinataire selon la revendication 7, **caractérisé en ce que** ledit seuil déterminé correspond sensiblement au taux d'erreur binaire calculé lorsque ledit premier module de réception fonctionne en mode de réception continue.

9. Procédé de contrôle d'un réseau optique comprenant une pluralité de nœuds sources et de nœuds destinataires,
comprenant une étape de détermination, pour l'un au moins desdits nœuds sources, d'une longueur d'onde source et d'instants d'émission de rafales optiques de signaux de données multi-porteuses obtenus par modulation d'un signal source à ladite longueur d'onde source, en fonction d'un temps de trajet desdites rafales de données entre ledit nœud source et l'un desdits nœuds destinataires, associé à ladite longueur d'onde source,
**caractérisé en ce que,** une rafale de données comprenant, outre des symboles de données utiles (PL), une séquence de symboles d'apprentissage (TS) composée d'une pluralité de symboles d'apprentissage, ladite étape de détermination comprend également une détermination (804) d'une taille de ladite séquence de symboles d'apprentissage (TS) desdites rafales de données mono-bande.

10. Produit programme d'ordinateur comprenant des instructions de code de programme pour la mise en œuvre d'un procédé selon la revendication 9, lorsqu'il est exécuté par le système d'émission de données des revendications 1 à 4.

11. Procédé d'émission de données dans un réseau optique comprenant une pluralité de nœuds sources et de nœuds destinataires,
comprenant une étape de génération d'un signal optique multi-porteuses de données obtenu par modulation d'un signal source à une longueur d'onde source et une étape d'émission dudit signal optique multi-porteuses de données sous forme de rafales de données mono-bande pouvant être associées à des longueurs d'onde source distinctes,
une rafale de données mono-bande comprenant outre des symboles de données utiles (PL), une séquence de symboles d'apprentissage (TS) composée d'une pluralité de symboles d'apprentissage,
**caractérisé en ce qu'il** comprend :
- une étape de réception de signaux de commande comprenant une information relative à un instant d'émission desdites rafales de données mono-bande, une information relative à une longueur d'onde source à utiliser pour l'émission desdites rafales de données mono-bande, et une information relative à une taille de ladite séquence de symboles d'apprentissage desdites rafales de données mono-bande,
**et en ce que** ladite étape de génération comprend une adaptation de ladite taille de ladite séquence de symboles d'apprentissage desdites rafales de données mono-bande en fonction de ladite information reçue.

12. Produit programme d'ordinateur comprenant des instructions de code de programme pour la mise en œuvre d'un procédé selon la revendication 11, lorsqu'il est exécuté par le noeud optique source le la revendication 5.

13. Procédé de réception de données dans un réseau optique comprenant une pluralité de nœuds sources et de nœuds destinataires,
comprenant une étape de réception de rafales optiques d'un signal multi-porteuses de données, obtenu par modulation d'un signal source à une longueur d'onde source, une rafale comprenant, outre des symboles de données utiles (PL), une séquence de symboles d'apprentissage (TS) composée d'une pluralité de symboles d'apprentissage,
ladite réception mettant en œuvre une égalisation de canal comprenant une étape de calcul de coefficients d'égalisation de canal à partir de ladite séquence de symboles d'apprentissage,
**caractérisé en ce qu'**il comprend également une étape (600) de réception de signaux de commande comprenant une information relative à une taille de ladite séquence de symboles d'apprentissage desdites rafales de données,
**et en ce que** ladite égalisation de canal (608) tient compte de ladite information relative à une taille de ladite séquence de symboles d'apprentissage pour le calcul desdits coefficients d'égalisation.

14. Produit programme d'ordinateur comprenant des instructions de code de programme pour la mise en œuvre d'un procédé selon la revendication 13, lorsqu'il est exécuté par le noeud optique destinataire des revendications 7 et 8.

15. Signal de commande d'un nœud source dans un réseau optique comprenant une pluralité de nœuds sources et de nœuds destinataires,
ledit signal de commande comprenant une information relative à une longueur d'onde source et une information relative à des instants d'émission par ledit nœud source de rafales optiques de signaux de données multi-porteuses obtenus par modulation d'un signal source à ladite longueur d'onde source,
**caractérisé en ce que,** une rafale de données comprenant outre des symboles de données utiles (PL), une séquence de symboles d'apprentissage (TS) composée d'une pluralité de symboles d'apprentissage, ledit signal de commande comprend également une information relative à une taille de ladite séquence de symboles d'apprentissage desdites rafales de données.

## Patentansprüche

1. System zur Aussendung von Daten in einem optischen Netzwerk, das eine Mehrzahl von Quellknoten (Nd_S; 90; 1-1... 1-5) und Zielknoten (Nd_D; 100; 2-1...2-5) umfasst, wobei ein Quellknoten (Nd_S; 90; 1-1... 1-5) geeignet ist, ein optisches Mehrträger-Datensignal zu erzeugen, das durch Modulation eines Quellsignals auf einer Quellwellenlänge erhalten wird, und das optische Mehrträger-Datensignal in Form von Monoband-Datenbursts auszusenden, die gesonderten Quellwellenlängen zugeordnet sein können,
wobei ein Monoband-Datenburst außer Nutzdatensymbole (PL) eine Sequenz von Lernsymbolen (TS) umfasst, die aus einer Mehrzahl von Lernsymbolen zusammengesetzt ist,
wobei eine Steuereinheit (UC), die zur Steuerungsebene des optischen Netzwerks gehört, dazu ausgebildet ist, für wenigstens einen der Quellknoten (Nd_S; 90; 1-1... 1-5) Zeitpunkte der Aussendung der Monoband-Datenbursts und Quellwellenlängen, die zur Aussendung der Monoband-Datenbursts zu nutzen sind, in Abhängigkeit von einer Laufzeit der Datenbursts zwischen dem Quellknoten und einem der Zielknoten (Nd_D; 100; 2-1...2-5) zu bestimmen, der der Quellwellenlänge zugeordnet ist,
**dadurch gekennzeichnet, dass** die Steuereinheit (UC) ebenfalls eine Größe der Sequenz von Lernsymbolen (TS) der Monoband-Datenbursts bestimmt.

2. System zur Aussendung von Daten nach Anspruch 1, **dadurch gekennzeichnet, dass** die Steuereinheit ein Modul zur Aussendung von Steuersignalen (GRANT) umfasst, die für die Quellknoten bestimmt sind und der Steuerungsebene entsprechen, umfassend:
- eine Information in Bezug auf einen Aussendungszeitpunkt der Monoband-Datenbursts;
- eine Information in Bezug auf eine Quellwellenlänge, die zur Aussendung der Monoband-Datenbursts zu nutzen ist;
- eine Information (Nb_TS) in Bezug auf eine Größe der Sequenz von Lernsymbolen der Monoband-Datenbursts.

3. Aussendungssystem nach einem der Ansprüche 1 und 2, **dadurch gekennzeichnet, dass** die Steuereinheit ein Modul zur Berechnung von Folgendem umfasst:
- einer Dauer des Nichtvorhandenseins eines Signals am Eingang wenigstens eines der Zielknoten, in Abhängigkeit von den Zeitpunkten der Aussendung der Monoband-Datenbursts von den Quellknoten und der Laufzeiten der Datenbursts zwischen den Quellknoten und dem Zielknoten;
- der Größe der Sequenz von Lernsymbolen der Monoband-Datenbursts, die für den Zielknoten bestimmt sind, in Abhängigkeit von der berechneten Dauer des Nichtvorhandenseins eines Signals.

4. System zur Aussendung von Daten nach Anspruch 3, **dadurch gekennzeichnet, dass** die Steuereinheit ebenfalls ein Modul zum Empfang von Informationen zur Empfangsleistung der Monoband-Datenbursts von den Zielknoten umfasst, und dadurch, dass das Rechenmodul geeignet ist, die Größe der Sequenz von Lernsymbolen der Monoband-Datenbursts in Abhängigkeit von den Informationen zur Empfangsleistung zu aktualisieren, die von der Steuereinheit empfangen werden.

5. Optischer Quellknoten (Nd_D; 100; 2-1...2-5) eines optischen Netzwerks, das eine Mehrzahl von Quellknoten und Zielknoten umfasst,
umfassend ein Modul zur Erzeugung (94) eines optischen Mehrträger-Datensignals, das durch Modulation eines Quellsignals auf einer Quellwellenlänge erhalten wird, und ein Modul zur Aussendung (95) des optischen Mehrträger-Datensignals in Form von Monoband-Datenbursts, die gesonderten Quellwellenlängen zugeordnet sein können, wobei ein Monoband-Datenburst außer Nutzdatensymbole (PL) eine Sequenz von Lernsymbolen (TS) umfasst, die aus einer Mehrzahl von Lernsymbolen zusammengesetzt ist,
wobei der Quellknoten ebenfalls ein Modul zum Empfang (91) von Steuersignalen umfasst, die eine Information in Bezug auf einen Aussendungszeitpunkt der Monoband-Datenbursts und eine Information in Bezug auf eine Quellwellenlänge, die zur Aussendung der Monoband-Datenbursts zu nutzen ist, umfassen,
**dadurch gekennzeichnet, dass** die Steuersignale (GRANT) ebenfalls eine Information (Nb_TS) in Bezug auf eine Größe der Sequenz von Lernsymbolen (TS) der Monoband-Datenbursts umfassen,
und dadurch, dass das Erzeugungsmodul (94) Mittel zur Anpassung der Größe der Sequenz von Lernsymbolen der Monoband-Datenbursts in Abhängigkeit von der empfangenen Information umfasst.

6. Optischer Zielknoten (Nd_D; 100; 2-1...2-5) eines optischen Netzwerks, das eine Mehrzahl von Quellknoten und Zielknoten umfasst,
umfassend ein erstes Modul zum Empfang (1004) von Bursts eines optischen Mehrträger-Datensignals, das durch Modulation eines Quellsignals auf einer Quellwellenlänge erhalten wird, wobei ein Datenburst außer Nutzdatensymbole (PL) eine Sequenz von Lernsymbolen (TS) umfasst, die aus einer Mehrzahl von Lernsymbolen zusammengesetzt ist, wobei das erste Empfangsmodul (1004) einen Kanalentzerrer (116) umfasst, der Mittel zur Berechnung von Kanalentzerrungskoeffizienten anhand der Sequenz von Lernsymbolen umfasst,
**dadurch gekennzeichnet, dass** der Zielknoten ebenfalls ein zweites Modul zum Empfang (1005) von Steuersignalen umfasst, die eine Information (Nb_TS) in Bezug auf eine Größe der Sequenz von Lernsymbolen (TS) der Monoband-Datenbursts umfassen,
und dadurch, dass der Kanalentzerrer die Information in Bezug auf eine Größe der Sequenz von Lernsymbolen für die Berechnung der Entzerrungskoeffizienten berücksichtigt.

7. Optischer Zielknoten nach Anspruch 6, **dadurch gekennzeichnet, dass** die Mittel zur Berechnung der Kanalentzerrungskoeffizienten iterative Rechenmittel sind, die Folgendes durchführen:
- eine Berechnung der Kanalentzerrungskoeffizienten durch Mittelung über eine Teilmenge von Lernsymbolen der Lernsequenz;
- eine Berechnung einer Bitfehlerrate mit Auswirkung auf Nutzdaten, die am Ausgang des ersten Empfangsmoduls erhalten werden, anhand der Kanalentzerrungskoeffizienten, die über die Teilmenge von Lernsymbolen berechnet werden;
- einen Versatz der Teilmenge von Lernsymbolen innerhalb der Lernsequenz;
dadurch, dass der Kanalentzerrer (116) Mittel zum Vergleichen der Bitfehlerraten, die für jede der Teilmengen von aufeinanderfolgenden Lernsymbolen berechnet werden, und Mittel zur Auswahl, als Entzerrungskoeffizienten, die vom Kanalentzerrer anzuwenden sind, der Kanalentzerrungskoeffizienten umfasst, die durch Mittelung über die erste der Teilmengen von Lernsymbolen erhalten werden, die einer berechneten Bitfehlerrate unter einer bestimmten Schwelle zugeordnet sind.

8. Optischer Zielknoten nach Anspruch 7, **dadurch gekennzeichnet, dass** die bestimmte Schwelle im Wesentlichen der berechneten Bitfehlerrate entspricht, wenn das erste Empfangsmodul im Modus für kontinuierlichen Empfang arbeitet.

9. Verfahren zur Steuerung eines optischen Netzwerks, das eine Mehrzahl von Quellknoten und Zielknoten umfasst, umfassend einen Schritt des Bestimmens, für wenigstens einen der Quellknoten, einer Quellwellenlänge und von Zeitpunkten der Aussendung von optischen Datenbursts von Mehrträger-Datensignalen, die durch Modulation eines Quellsignals auf der Quellwellenlänge erhalten werden, in Abhängigkeit von einer Laufzeit der Datenbursts zwischen dem Quellknoten und einem der Zielknoten, der der Quellwellenlänge zugeordnet ist,
**dadurch gekennzeichnet, dass**, ein Datenburst außer Nutzdatensymbole (PL) eine Sequenz von Lernsymbolen (TS) umfassend, die aus einer Mehrzahl von Lernsymbolen zusammengesetzt ist, der Schritt des Bestimmens ebenfalls ein Bestimmen (804) einer Größe der Sequenz von Lernsymbolen (TS) der Monoband-Datenbursts umfasst.

10. Computerprogrammprodukt, umfassend Programmcode-Anweisungen für die Umsetzung eines Verfahrens nach Anspruch 9, wenn es von dem System zur Aussendung von Daten nach den Ansprüchen 1 bis 4 ausgeführt wird.

11. Verfahren zur Aussendung von Daten in einem optischen Netzwerk, das eine Mehrzahl von Quellknoten und Zielknoten umfasst,
umfassend einen Schritt des Erzeugens eines optischen Mehrträger-Datensignals, das durch Modulation eines Quellsignals auf einer Quellwellenlänge erhalten wird, und einen Schritt des Aussendens des optischen Mehrträger-Datensignals in Form von Monoband-Datenbursts, die gesonderten Quellwellenlängen zugeordnet sein können, wobei ein Monoband-Datenburst außer Nutzdatensymbole (PL) eine Sequenz von Lernsymbolen (TS) umfasst, die aus einer Mehrzahl von Lernsymbolen zusammengesetzt ist,
**dadurch gekennzeichnet, dass** es Folgendes umfasst:
- einen Schritt des Empfangens von Steuersignalen, die eine Information in Bezug auf einen Aussendungszeitpunkt der Monoband-Datenbursts, eine Information in Bezug auf eine Quellwellenlänge, die zur Aussendung der Monoband-Datenbursts zu nutzen ist, und eine Information in Bezug auf eine Größe der Sequenz von Lernsymbolen der Monoband-Datenbursts umfassen,
und dadurch, dass der Schritt des Erzeugens ein Anpassen der Größe der Sequenz von Lernsymbolen der Monoband-Datenbursts in Abhängigkeit von der empfangenen Information umfasst.

12. Computerprogrammprodukt, umfassend Programmcode-Anweisungen für die Umsetzung eines Verfahrens nach Anspruch 11, wenn es vom optischen Quellknoten nach Anspruch 5 ausgeführt wird.

13. Verfahren zum Empfang von Daten in einem optischen Netzwerk, das eine Mehrzahl von Quellknoten und Zielknoten umfasst,
umfassend einen Schritt des Empfangens von optischen Bursts eines Mehrträger-Datensignals, das durch Modulation eines Quellsignals auf einer Quellwellenlänge erhalten wird, wobei ein Burst außer Nutzdatensymbole (PL) eine Sequenz von Lernsymbolen (TS) umfasst, die aus einer Mehrzahl von Lernsymbolen zusammengesetzt ist,
wobei bei dem Empfangen eine Kanalentzerrung durchgeführt wird, die einen Schritt des Berechnens von Kanalentzerrungskoeffizienten anhand der Sequenz von Lernsymbolen umfasst,
**dadurch gekennzeichnet, dass** es ebenfalls einen Schritt (600) des Empfangens von Steuersignalen umfasst, die eine Information in Bezug auf eine Größe der Sequenz von Lernsymbolen der Datenbursts umfassen,
und dadurch, dass die Kanalentzerrung (608) die Information in Bezug auf eine Größe der Sequenz von Lernsymbolen für die Berechnung der Entzerrungskoeffizienten berücksichtigt.

14. Computerprogrammprodukt, umfassend Programmcode-Anweisungen für die Umsetzung eines Verfahrens nach Anspruch 13, wenn es vom optischen Zielknoten nach den Ansprüchen 7 und 8 ausgeführt wird.

15. Steuersignal eines Quellknotens in einem optischen Netzwerk, das eine Mehrzahl von Quellknoten und Zielknoten umfasst,
wobei das Steuersignal eine Information in Bezug auf eine Quellwellenlänge und eine Information in Bezug auf Zeitpunkte der Aussendung, durch den Quellknoten, von optischen Datenbursts von Mehrträger-Datensignalen, die durch Modulation eines Quellsignals auf der Quellwellenlänge erhalten werden, umfasst,
**dadurch gekennzeichnet, dass**, ein Datenburst außer Nutzdatensymbole (PL) eine Sequenz von Lernsymbolen (TS) umfassend, die aus einer Mehrzahl von Lernsymbolen zusammengesetzt ist, das Steuersignal ebenfalls eine Information in Bezug auf eine Größe der Sequenz von Lernsymbolen der Datenbursts umfasst.

## Claims

1. Data transmission system in an optical network comprising a plurality of source nodes (Nd_S; 90; 1-1...1-5) and of destination nodes (Nd_D; 100; 2-1...2-5),
a source node (Nd_S; 90; 1-1...1-5) being able to generate a multicarrier optical data signal obtained by modulation of a source signal at a source wavelength and to transmit said multicarrier optical data signal in the form of single-band data bursts that can be associated with distinct source wavelengths,
a single-band data burst comprising, in addition to the payload data symbols (PL), a sequence of learning symbols (TS) composed of a plurality of learning symbols,
a control unit (UC), belonging to the control plane of the optical network, being configured to determine, for at least one of said source nodes (Nd_S; 90; 1-1...1-5), instants of transmission of said single-band data bursts and source wavelengths to be used for the transmission of said single-band data bursts, as a function of a time of travel of said data bursts between said source node and one of said destination nodes (Nd_D; 100; 2-1...2-5), associated with said source wavelength,
**characterized in that** said control unit (UC) also determines a size of said sequence of learning symbols (TS) of said single-band data bursts.

2. Data transmission system according to Claim 1, **characterized in that** said control unit comprises a module for transmitting control signals (GRANT) intended for said source nodes and conforming to said control plane, comprising:
- information relating to an instant of transmission of said single-band data bursts;
- information relating to a source wavelength to be used for the transmission of said single-band data bursts;
- information (Nb_TS) relating to a size of said sequence of learning symbols of said single-band data bursts.

3. Transmission system according to either one of Claims 1 and 2, **characterized in that** said control unit comprises a module for computing:
- a signal absence time at the input of at least one of said destination nodes, as a function of said instants of transmission of said single-band data bursts by said source nodes and of said times of travel of said data bursts between said source nodes and said destination node;
- said size of said sequence of learning symbols of said single-band data bursts intended for said destination node, as a function of said computed signal absence time.

4. Data transmission system according to Claim 3, **characterized in that** said control unit also comprises a module for receiving information on reception performance of said single-band data bursts originating from said destination nodes, **and in that** said computation module is able to update said size of said sequence of learning symbols of said single-band data bursts as a function of said reception performance information received by said control unit.

5. Source optical node (Nd_D; 100; 2-1...2-5) of an optical network comprising a plurality of source nodes and of destination nodes,
comprising a module (94) for generating a multicarrier optical data signal obtained by modulation of a source signal at a source wavelength and a module (95) for transmitting said multicarrier optical data signal in the form of single-band data bursts that can be associated with distinct source wavelengths,
a single-band data burst comprising, in addition to the payload data symbols (PL), a sequence of learning symbols (TS) composed of a plurality of learning symbols,
said source node also comprising a module (91) for receiving control signals comprising information relating to an instant of transmission of said single-band data bursts and information relating to a source wavelength to be used for the transmission of said single-band data bursts,
**characterized in that** said control signals (GRANT) also comprise information (Nb TS) relating to a size of said sequence of learning symbols (TS) of said single-band data bursts,
**and in that** said generation module (94) comprises means for adapting said size of said sequence of learning symbols of said single-band data bursts as a function of said received information.

6. Destination optical node (Nd D; 100; 2-1...2-5) of an optical network comprising a plurality of source nodes and of destination nodes,
comprising a first module (1004) for receiving bursts of a multicarrier optical data signal, obtained by modulation of a source signal at a source wavelength,
a data burst comprising, in addition to the payload data symbols (PL), a sequence of learning symbols (TS) composed of a plurality of learning symbols,
said first reception module (1004) comprising a channel equalizer (116) comprising means for computing channel equalization coefficients on the basis of said sequence of learning symbols,
**characterized in that** said destination node also comprises a second module (1005) for receiving control signals comprising information (Nb_TS) relating to a size of said sequence of learning symbols (TS) of said data bursts,
**and in that** said channel equalizer takes account of said information relating to a size of said sequence of learning symbols for the computation of said equalization coefficients.

7. Destination optical node according to Claim 6, **characterized in that** said means for computing said channel equalization coefficients are iterative computation means implementing:
- a computation of said channel equalization coefficients by averaging over a subset of learning symbols of said learning sequence;
- a computation of a bit error ratio affecting payload data obtained at the output of said first reception module on the basis of said channel equalization coefficients computed over said subset of learning symbols;
- a shifting of said subset of learning symbols within said learning sequence;
**in that** said channel equalizer (116) comprises means for comparing bit error ratios computed for each of said successive subsets of learning symbols and means for selecting, as equalization coefficients to be applied by said channel equalizer, channel equalization coefficients obtained by averaging over the first of said subsets of learning symbols associated with a computed bit error ratio below a determined threshold.

8. Destination optical node according to Claim 7, **characterized in that** said determined threshold corresponds substantially to the bit error ratio computed when said first reception module operates in continuous reception mode.

9. Method for controlling an optical network comprising a plurality of source nodes and of destination nodes, comprising a step of determination, for at least one of said source nodes, of a source wavelength and of instants of transmission of optical bursts of multicarrier data signals obtained by modulation of a source signal at said source wavelength, as a function of a time of travel of said data bursts between said source node and one of said destination nodes, associated with said source wavelength,
**characterized in that,** a data burst comprising, in addition to the payload data symbols (PL), a sequence of learning symbols (TS) composed of a plurality of learning symbols, said determination step also comprises a determination (804) of a size of said sequence of learning symbols (TS) of said single-band data bursts.

10. Computer program product comprising program code instructions for the implementation of a method according to Claim 9, when it is executed by the data transmission system of Claims 1 to 4.

11. Data transmission method in an optical network comprising a plurality of source nodes and of destination nodes,
comprising a step of generation of an optical multicarrier data signal obtained by modulation of a source signal at a source wavelength and a step of transmission of said multicarrier optical data signal in the form of single-band data bursts that can be associated with distinct source wavelengths,
a single-band data burst further comprising payload data symbols (PL), a sequence of learning symbols (TS) composed of a plurality of learning symbols,
**characterized in that** it comprises:
- a step of reception of control signals comprising information relating to an instant of transmission of said single-band data bursts, information relating to a source wavelength to be used for the transmission of said single-band data bursts, and information relating to a size of said sequence of learning symbols of said single-band data bursts,
**and in that** said generation step comprises an adaptation of said size of said sequence of learning symbols of said single-band data bursts as a function of said received information.

12. Computer program product comprising program code instructions for the implementation of a method according to Claim 11, when it is executed by the source optical node of Claim 5.

13. Data reception method in an optical network comprising a plurality of source nodes and of destination nodes,
comprising a step of reception of optical bursts of a multicarrier data signal, obtained by modulation of a source signal at a source wavelength, a burst comprising, in addition to the payload data symbols (PL), a sequence of learning symbols (TS) composed of a plurality of learning symbols,
said reception implementing a channel equalization comprising a step of computation of channel equalization coefficients on the basis of said sequence of learning symbols,
**characterized in that** it also comprises a step (600) of reception of control signals comprising information relating to a size of said sequence of learning symbols of said data bursts,
**and in that** said channel equalization (608) takes account of said information relating to a size of said sequence of learning symbols for the computation of said equalization coefficients.

14. Computer program product comprising program code instructions for the implementation of a method according to Claim 13, when it is executed by the destination optical node of Claims 7 and 8.

15. Control signal of a source node in an optical network comprising a plurality of source nodes and of destination nodes,
said control signal comprising information relating to a source wavelength and information relating to instants of transmission by said source node of optical bursts of multicarrier data signals obtained by modulation of a source signal at said source wavelength,
**characterized in that,** a data burst further comprising payload data symbols (PL), a sequence of learning symbols (TS) composed of a plurality of learning symbols, said control signal also comprises information relating to a size of said sequence of learning symbols of said data bursts.
